# EUROPÄISCHE PATENTSCHRIFT

(11) **EP 3 201 703 B1**
(45) Veröffentlichungstag und Bekanntmachung des Hinweises auf die Patenterteilung: **20.05.2020**
(21) Anmeldenummer: 15785061.1
(22) Anmeldetag: 02.10.2015
(51) Int. Cl.: G05B 19/042

(54) **STEUERUNG FÜR GEBÄUDEBELEUCHTUNGEN UND ANDERE HAUSTECHNIKINSTALLATIONEN**
CONTROL SYSTEM FOR BUILDING LIGHTING SYSTEMS AND OTHER DOMESTIC ENGINEERING FACILITIES
COMMANDE POUR DES ÉCLAIRAGES DE BÂTIMENT ET D'AUTRES INSTALLATIONS TECHNIQUES DOMESTIQUES

(30) Priorität: 02.10.2014 DE 102014220059; 02.10.2014 DE 102014220057; 02.10.2014 DE 102014220055
(43) Veröffentlichungstag der Anmeldung: 09.08.2017
(73) Patentinhaber: HiAsset GmbH, 67657 Kaiserslautern (DE)
(72) Erfinder: HINKEL, Ralf, 67724 Höringen (DE); HINKEL, Rene, 67724 Höringen (DE)
(74) Vertreter: Pietruk, Claus Peter
(86) Internationale Anmeldenummer: PCT/EP2015/072878
(87) Internationale Veröffentlichungsnummer: WO 2016/050981

(56) Entgegenhaltungen:
- DE-A1- 10 230 067
- US-A1- 2012 029 691
- US-A1- 2013 038 800
- US-B1- 6 380 931
- NN: "Computerprogramm erkennt, wer auf der Tastatur schreibt", Spektrum.de , 30. September 2003 (2003-09-30), XP002752128, Gefunden im Internet: URL:http://www.spektrum.de/news/computerpr ogramm-erkennt-wer-auf-der-tastatur-schrei bt/678837 [gefunden am 2015-12-11]

## Beschreibung

Die vorliegende Erfindung betrifft das oberbegrifflich Beanspruchte und bezieht sich somit allgemein auf die Steuerung von Installationen in Gebäuden.

Es gibt in modernen Gebäuden wie Wohngebäuden, Bürogebäuden, öffentlichen Gebäuden wie Konferenzzentren, Konzertsälen usw. eine Reihe unterschiedlicher Haustechnikinstallationen. Hierzu zählen Lüftung, Heizung, Kühlung, Frischluftzufuhr, Jalousien bzw. Rolladen, und etwa hinsichtlich des An-/ Aus-Zustandes, der Helligkeit, der Farbtemperatur steuerbare Lichtquellen, Raumbeschallungsanlagen usw.. Während einige dieser Installationen im Regelfall lediglich in öffentlichen Gebäuden wie Konferenzsälen, Konzertsälen usw. bzw. in Büros verwendet werden, ist gleichwohl auch in privaten Gebäuden wie privat genutzten Ein- oder Mehrfamilienhäusern bereits eine Reihe von per se steuerbaren Haustechnikinstallationen vorhanden. Erwähnt sei hier auch, dass evtl. weitere Haustechnikinstallationen wie Photovoltaikanlagen, Solarthermieanlagen usw. überwacht und/oder einzustellen sind, auch wenn dies selten geschehen muss.

Per se ist es zwar möglich, alle Geräte und Installationen separat über einzelne Schalter oder Schalttafeln anzusteuern; dies hat jedoch Nachteile, weil nicht nur der Verdrahtungsaufwand hoch ist und die Bedienung gegebenenfalls wenig komfortabel und schlecht automatisierbar ist, sondern auch weil eventuell im Laufe der Gebäudenutzung von einem Benützer Änderungen gewünscht werden.

Es ist bereits vorgeschlagen worden, Installationen zu vernetzen und damit die Bedienung zu erleichtern. Zur Steuerung etwa der für einen gegebenen Raum vorhandenen Installationen wie Licht, Heizung und Jalousien kann dann ein einzelner, türnah angeordneter Schalter verwendet werden, über den alle Geräte simultan gesteuert werden. Auch hierbei sind aber Anpassungen an Änderungen der Installation noch aufwendig. Oftmals sind etwa für die Steuerung unterschiedlicher Installationen unterschiedliche Schalter wie Ein-Aus-Taster, Wippschalter usw. nötig, was einen Austausch bei geänderter Nutzung erforderlich machen kann.

In der DE 10 2012 224 396 A1 ist bereits auf das Problem eingegangen worden, ein Interaktionsgerät wie ein Schaltermodul für eine Gebäudeinfrastruktur mit geringem Aufwand vielfältig anpassen zu können. Die DE 10 2012 224 396 A1 schlägt zu diesem Zweck ein Interaktionsgerät für eine Gebäudeinfrastruktur, umfassend ein Basisgerät und einen auf das Basisgerät aufsteckbaren Aufsatz vor, wobei der Aufsatz mindestens ein Interaktionselement und ein aufsatzseitiges Kommunikationsmittel umfasst; wobei das Basisgerät ein basisseitiges Kommunikationsmittel umfasst; wobei das mindestens eine Interaktionselement durch das basisseitige Kommunikationsmittel ansteuerbar ist; wobei durch das aufsatzseitige Kommunikationsmittel eine kodierte Beschreibung von Parametern des mindestens einen Interaktionselementes an das Basisgerät übermittelbar ist; und wobei das Basisgerät ausgestaltet und/oder adaptiert ist, anhand der übermittelten kodierten Beschreibung der Parameter des Interaktionselementes die Ansteuerung des Interaktionselementes anzupassen. Es wird angegeben, dass sich die Aufsätze hinsichtlich Optik und Zuverlässigkeit beeinflussender Parameter unterscheiden können, wie Anzahl der Farben eines Displays am Aufsatz; Auflösung; Helligkeit und Kontrast; Anzeigetechnologie (LED, LCD, elnk); Vandalismussicherheit; Beständigkeit gegen Reinigungs- und Desinfektionsmittel. Auch hinsichtlich der Bedienmöglichkeiten sollen Unterschiede für die Displayaufsätze möglich sein, etwa hinsichtlich Größe und Form-Faktor des Displaybereichs, Berühungsempfindlichkeit des Displays (keine, Touchscreen, Multitouch); Anzahl, Position und Art von Tastern, Knöpfen, Drehreglern, Schiebereglern, weiteren Touch-Feldern; weiteren Ausgabemöglichkeiten, z.B. akkustisch (Summer, Piepser, Klingeln, Warntöne); Sensorik für die Interaktion, z.B. Näherungs- oder Bewegungssensor; Sensorik für die Gebäudesteuerung, z.B. Helligkeits- oder Temperatursensor. Es wird diskutiert, dass durch einfaches, werkzeugloses Ab- und Aufstecken eines Displayaufsatzes vor Ort bei Verbleiben des Basisgerätes in der Unterputzdose Bedienmöglichkeiten, also sowohl Funktion als auch Design, leicht vor Ort ausgetauscht werden können.

Die Erfahrung zeigt jedoch, dass, ungeachtet eines womöglich für den Benutzer höheren Komforts die Akzeptanz komplexer Haustechnikinstallationen immer noch gering ist. Es wäre wünschenswert, die Akzeptanz von Steuerungen für die Gebäudetechnik zu erhöhen, indem die Benutzbarkeit verbessert und eine preiswerte Nutzung der einzelnen Komponenten ermöglicht wird.

Erwähnt sei auch die DE 10 2012 003 873 A1. Diese beschreibt ein Verfahren zum Betreiben eines Systems zur Heimautomatisierung, Heimautomatisierungssystemsteuerrechner sowie ein Heimautomatisierungssystem, bei dem eine Einbindung eines Haushaltsgeräts in die Programmierung besonders einfach ist. Hierzu wird eine ein Gerätetyp kennzeichnende Kennung von einem Haushaltsgerät empfangen. Anschließend werden für den Gerätetyp angepasste Parameteroptionen für eine Einstellung von Sensoren und/oder Aktoren des Heimautomatisierungssystems empfangen und einem Benutzer zur Auswahl auf einer Benutzeroberfläche angeboten. Dabei wird auch vorgeschlagen, dass die Parameteroptionen zumindest ein Einstellungsprofil für eine aufeinander abgestimmte Einstellung einer Mehrzahl von Sensoren und/oder Aktoren umfasst. Es soll nicht ausreichen, nur einen Aktor bzw. einen Sensor zu programmieren. Es sei notwendig, Sensoren und Aktoren einander zuzuordnen und entsprechende ereignisgesteuerte Aktionen zu bestimmen. Dies könne in einem Einstellungsprofil enthalten sein. Aufeinander abgestimmte Einstellungen können sowohl die Verknüpfung von Sensoren zu Aktoren als auch die Verknüpfung mit ereignisgesteuerten Aktionen und Regeln sein. Das Einstellprofil könne auch eine Szene sein.

Ein Sensor nach DE 10 2012 003 873 A1 kann beispielsweise ein Schalter, ein Bewegungsmelder, ein Taster, ein Türkontakt, ein Thermostat, ein Fensterkontakt, ein Bildsensor, ein Helligkeitssensor, ein Temperatursensor, ein Binärsensor, ein Mikrofon, oder eine andere Einrichtung zum Erfassen von Umweltveränderungen sein. Ein Aktor kann insbesondere ein Relais, ein Ventil, ein Motor, ein Stellmotor, ein Dimmer, eine Rolladensteuerung, ein Schalter, ein Signalgeber, ein Infrarotsignalgeber, ein akustischer Signalgeber, ein Bedienteil, ein Informationsterminal oder ein sonstiges Gerät zum Durchführen von Schaltvorgängen, Steuervorgängen, Regelvorgängen oder sonstigen Aktionen und/oder zum Ausgeben von Informationen und Zuständen sein. Erwähnt wird, dass die Konfiguration eines "Smart Home Kontrollers" beispielweise von einem privaten Personalcomputer erfolgen kann oder über ein Mobiltelefon, wobei das Mobiltelefon über ein Gateway mit dem Internet verbunden und über das Gateway eine Verbindung mit der zentralen Verwaltungseinheit aufzunehmen in der Lage sein soll.

Aus der DE 102 30 067 A1 ist ein Verfahren zur automatischen Steuerung elektrischer Geräte bekannt, die sich in Räumen befinden, die eine verschließbare Eingangstüre haben, z.B. in einer Wohnung oder in einem Labor, was das Ein- und Ausschalten der sich in der Räumlichkeit befindenden elektrischen Geräte einschließt, wobei bei einem Abschließen der Tür des Raumes von außen automatische die Stromzufuhr zu dem in sich in den Raum befindlichen elektrischen Geräte eingestellt wird.

Die Aufgabe der vorliegenden Erfindung besteht darin, Neues für die gewerbliche Anwendung bereitzustellen.

Die Lösung dieser Aufgabe wird in unabhängiger Form beansprucht. Bevorzugte Ausführungsformen finden sich in den Unteransprüchen.

Ein erster wesentlicher Gedanke besteht somit darin, dass eine Beleuchtungssteuerung für ein Gebäude mit einem Schaltermodul, das bei einer Türe angeordnet und mit dem Lichtstromnetz verbunden ist, um die Beleuchtung schalterbetätigungsabhängig zu steuern, mit einer dediziert für einen Türsensor bestimmten Schnittstelle versehen ist, wobei das Schaltermodul dann weiter dazu ausgebildet ist, den Türzustand zu erfassen und die Beleuchtung türzustandsabhängig zu steuern. Zur Erfassung bzw. Reaktion auf die Erfassung wird wenigstens eine digitale Schaltung vorgesehen sein, die einen von mehreren, bevorzugt einen von mehr als zwei Zuständen einnehmen kann im Ansprechen auf mit dem Sensor über die ihm zugeordnete (und zumindest für sehr große Zeiträume nur von ihm benutzte) Schnittstelle erfasste Signale.

Die den Türzustand ermittelnden Sensoren können insbesondere dazu vorgesehen sein, den Sperrzustand der Türe zu erfassen, also zu ermitteln, ob die Tür verriegelt oder entriegelt ist. Es kann der Schließzustand ermittelt werden, also festgestellt werden, ob die Türe für den Durchgang geöffnet oder geschlossen ist; es können aber auch Sensoren ermitteln, ob eine Türklinke betätigt wird oder ob Bewegungen erfasst werden. Gegebenenfalls können auch Bewegungssensoren oder Lichtschranken vorgesehen sein. Diese lassen sich oftmals problemlos im Türfalz anordnen, so dass die Sensoren kaum auffallen. Die Sensoren können kapazitiv, magnetisch oder mit Ultraschallsignalen arbeiten. Während die Verwendung von Sensoren, die über Kabel mit dem Schaltermodul verbunden sind, bevorzugt ist, wäre per se die Ausbildung der erfindungsgemäßen Anordnung mit einem kabellosen Sensor ebenfalls möglich.

Es sei erwähnt, dass neben Licht mit dem Schaltermodul bevorzugt auch wechselnde Haustechnikinstallationen betätigt werden können, die beispielsweise umfassen können mehrere aus der Gruppe Rolladen, Jalousie, Licht, Helligkeit Lichtfarbe, Heizung, Lüftung, Klimaanlage, Türöffnung/Türsperrung.

Wenn vorliegend davon die Rede ist, dass die Schnittstelle zum Sensor zumindest für sehr große Zeiträume nur vom Sensor benutzt wird, so bedeutet dies, dass die Schnittstelle entweder nur für einen oder mehrere lokale, d.h. den Türen des Raumes oder Raumzuganges, in welchem sich der Schalter befindet zugeordnete, den Türzustand unmittelbar erfassende Sensoren benutzt wird, was bei einer Anbindung über Kabel ohne weiteres gegeben ist, oder dass eine Schnittstelle für eine drahtlose Sensoranbindung vorhanden ist, die zumindest im Regelfall, also insbesondere dann, wenn kein konfigurierender Eingriff vorgenommen wird, jeweils nur für die Tür-Sensoren verwendet wird. In einem solchen Fall kann z.B. eine Bluetooth-Verbindung zu einem Sensor geschaffen werden und über diese Bluetooth-Verbindung eine Kommunikation mit anderen Geräten allenfalls zugelassen werden, um den Schalter oder andere Geräte der Haustechnikinstallation zu konfigurieren. In einem solchen Fall wird die Schnittstelle für sehr große Zeiträume, nämlich jene, während denen nicht (neu) konfiguriert wird, per se nur für den oder die Türsensoren verwendet werden. Dass sich die Energie für derartige Verbindungen türseitig z.B. über Summeranschlüsse, wie sie bei Haustüren gebräuchlich sind, über Batterien oder generiert aus einer Bewegung des Türblattes, der Klinke usw. beziehen lässt, sei erwähnt.

Für die Verwendung von kabelgebundenen Sensoren, die typisch Analogsignale an das Schaltermodul speisen werden, sind allenfalls geringe Kabellängen erforderlich, so dass die entsprechende Verwendung vollkommen unkritisch ist. Dies gilt auch, weil im Regelfall eine Verlegung quer, typisch senkrecht zu einem Lichtnetz-Stromleitungsverlauf erfolgen wird, was induktive Einstreuungen minimiert.

Dem Schnittstelleneingang des Schaltermoduls kann gegebenenfalls ein Analog-Digitalkonverter, gegebenenfalls mit entsprechender Signalkonditionierung zugeordnet sein, um analoge Sensorsignale zu erfassen; typisch wird es jedoch ausreichen, einen binären Status wie offen/zu, versperrt/entriegelt, unbewegt/bewegt zu unterscheiden. Wenn eine Signalkonditionierung erfolgt, kann diese auf die typischen Signalcharakteristiken eines spezifischen Sensors, wie eines Magnetkontaktsensors, kapazitiven Sensors, Lichtschranken, Ultraschallsensoren, elektrischer Kontaktsensoren usw. ausgelegt sein.

Es wurde erkannt, dass sich durch die Auswertung (auch) des lokalen Türzustandes die Funktionalität der Beleuchtungssteuerung wesentlich erhöhen lässt. Diese Auswertung des Türzustandes ist einfach, weil Schaltermodule, insbesondere die hier bevorzugt zu verwendenden Dimmermodule, oftmals unmittelbar neben einer Türe angeordnet werden, damit ein Gebäudenutzer wie der Bewohner eines Wohngebäudes bei Betreten eines Raumes durch die Zimmertüre, um die es sich bevorzugt bei der Türe, deren Türzustand erfasst wird, handelt, das Licht erforderlichenfalls einschalten kann oder das Licht bei Verlassen des Raumes ausschalten kann.

Die Nähe des typisch in einer Unterputzdose angeordneten Schaltermoduls zur Türe erlaubt es, selbst dort, wo der Türzustand mittels eines über eine elektrische Drahtleitung angebundenen Sensor erfasst werden soll, mit nur geringem baulichen Aufwand die Installation der Erfindung zu ermöglichen. Im Regelfall reicht nämlich eine 10 bis 20cm tiefe Bohrung von der Türe bis zum Lichtschalter bzw. der dafür vorgesehenen Unterputzdose. Diese Bohrung ist problemfrei möglich, und zwar selbst dann, wenn bereits eine Türzarge verbaut wurde, da ohne weiteres eine dünne Bohrung durch die Zarge geführt werden kann, gegebenenfalls, um eine weniger auffällige Installation zu erhalten, durch den Falz, in den die Türe im Schließzustand einschlägt. Zudem bleibt eine Leistungsversorgung der Sensoren dabei extrem einfach, weil Energie aus dem an das Lichtstromnetz angeschlossenen Schalter erhalten werden kann.

Die Bezugnahme der Beleuchtungssteuerung nicht nur auf die Schalterbetätigung, sondern gleichzeitig auch auf den Türzustand erlaubt eine signifikante Erhöhung der Funktionalität gerade im privaten Wohnbereich. Gleichzeitig wird durch die unmittelbar vorhandene Schnittstelle am Dimmer- bzw. Schaltermodul die Einrichtung der Anordnung signifikant erleichtert.

Was die Funktionalitätserhöhung angeht, wird es leicht möglich und ist es bevorzugt, durch Erfassung der Türzustandsstatistik bzw. der Schaltermodulbetätigungsstatistik festzustellen, wenn über einen zulangen Zeitraum weder ein Schalter betätigt wurde noch eine Türe. Bei hilfsbedürftigen, beispielsweise gebrechlichen oder leicht dementen Personen kann anhand dieser Historie festgestellt werden, dass eine Person womöglich gefährdet ist und ein Eingriff Dritter erforderlich ist.

Weiter kann durch Erfassung des Türzustandes auch bei Betreten des Raumes unmittelbar Licht ein- oder ausgeschaltet werden, wenn dies durch eine Schalterbetätigung zuvor so festgelegt wurde. Dies erlaubt etwa an Stellen Licht automatisch einzuschalten, an denen oftmals der Benutzer keine Hand frei hat, um das Licht einzuschalten, etwa weil er, wie beim Betreten einer Vorratskammer, Vorräte trägt. Dies ist signifikant bequemer für den Benutzer als gegebenenfalls erst seine Last absetzen zu müssen und es ergibt sich nicht das Problem, mit - optisch oft wenig ansprechenden- Bewegungsmeldern, das Bewegungsfeld erfassen zu müssen.

Auch kann ohne Probleme durch kurze Schalterbetätigung festgelegt werden, dass Licht bei einer künftigen Öffnung der Türe ausgeschaltet werden soll. Dies kann dort sinnvoll sein, wo Kinder in einem Raum spielen sollen, da Kinder häufig Licht nicht zuverlässig ausschalten. Auch in einem solchen Fall treten jene Probleme, die typisch mit der Installation von Bewegungsmeldern in Räumen verbunden sind, beispielsweise bezüglich des Ausschaltens der Beleuchtung bei still im Raum sitzenden Personen, nicht auf.

Es sei erwähnt, dass die Beleuchtung nicht ausschließlich bezogen auf den aktuellen Türzustand gesteuert werden muss, sondern auch ein typischer zeitlicher Verlauf des Türzustandes berücksichtigt werden kann und/oder neben dem Türzustand und der Schalterbetätigung weitere Parameter herangezogen werden können, um festzulegen, wie auf eine jeweilige Schaltermodulbetätigung bei gegebenem Türzustand zu reagieren ist. So kann etwa eine Reaktion bei Dunkelheit anders ausfallen als bei Licht oder am Tag anders ausfallen als bei Nacht.

Es versteht sich, dass eine Reaktion z.B. auf statistische Daten über die vorherige Nutzung bezogen sein kann. Um dies zu ermöglichen, wird ein Speicher zum Abspeichern bestimmter Verhaltensmuster vorhanden sein, in welchem beispielsweise die Anzahl der Betätigungen von Türen, Schaltern für Licht, Jalousien usw. getrennt nach Wochentag und gegebenenfalls viertel- halb- oder stundenweise, d.h. zeitinterverallartig, unterteilter Tageszeit gezählt werden kann. Eine bestimmte Reaktion kann dann unterschiedlich ausfallen, je nach Tageszeit und Wochentag, oder, falls andere Sensorwerte mit in die Speicherung einbezogen werden, je nach Tageslichteinfall, Temperatur, Schließzustand von Türen in anderen Räumen oder von Fenstern usw. Es kann entweder eine Schalterbetätigungshistorie unter Ablegen der jeweiligen Sensorwerte abgespeichert werden und diese Historie dann später ausgewertet werden oder es wird unmittelbar auf Schalterbetätigung bereits ein entsprechender Zählwert hochgezählt, wobei ein Zählwertfeld vorgesehen ist, das separate Zähler von Schalterbetätigungen für jede mögliche Sensorwertkombination oder jede mögliche Kombination an Sensorwertintervallen aufweist. Wenn dann anhand der abgespeicherten Daten mit hinreichend großer Wahrscheinlichkeit feststeht, dass ein bestimmter Benutzer mit einem Schalter, der wählbar zur Steuerung verschiedener Geräte der Haustechnikinstallation verwendbar ist, zu Zeiten mit viel Tageslicht und hohen Temperaturen stets die Jalousien absenkt, nicht aber die Heizung oder Licht betätigt, kann bei Eintreten einer solchen Situation der Schalter von vorneherein konfiguriert werden. Es wird also unter anderem als bevorzugt vorgeschlagen, dass ein multifunktionaler Schalter für gemäß Vorbenutzungshistorie besonders wahrscheinliche Betätigungen konfiguriert wird, evtl. als selbstlernender Schalter. Es sei auch erwähnt, dass bei Vorhandensein einer Vielzahl von unterschiedlichen Sensoren eine typische Reaktion aus mehreren möglichen mit Fuzzy-Logik bestimmt werden kann.

Es ist im übrigen nicht zwingend, nur den Türzustand jener Türe zu erfassen, bei welcher das Schaltermodul angeordnet ist. Gerade in komplexen Installationen kann es vorteilhaft sein, den Türzustand von vielen Türen zu erfassen und die Beleuchtung türzustandsabhängig zu steuern, und damit einen Türzustand nicht nur jener Türe auszuwerten, bei welcher das Schaltermodul angeordnet ist. So kann z.B. durch Auswertung des Türschließverhaltens mehrere Türen mit höherer Sicherheit entschieden werden, ob sich eine in einer Wohnung befindliche Person normal von Zimmer zu Zimmer bewegt oder, weil dies über längere Zeit nicht der Fall war, womöglich Hilfe benötigt.

Außerdem gibt es regelmäßig Türen wie eine Wohnungseingangstüre, die im Normalfall zu bestimmten Zeiten, etwa während der typischen Schlafzeiten der Bewohner, nicht geöffnet werden. Geschieht dies doch, kann eine Alarmierung erforderlich sein. Dies kann beispielsweise in jenem Raum geschehen, in dem sich die Bewohner aktuell aufhalten, beispielsweise im Schlafzimmer.

Wenn die Haustechnikanlage der Alarmierung dient, kann durch Auswertung der Zustände mehrerer Türen bzw. der zeitlichen Abfolge von Zustandsänderungen mehrerer Türen überdies gegebenenfalls ein Fehlalarm vermieden werden. Dabei kann etwa während einer Lernphase festgestellt werden, dass im Normalbetrieb nach nächtlichem Betreten einer Wohnung eine bestimmte Reihenfolge betätigter Türen eingehalten wird, beispielsweise Wohnungseingangstür - Badezimmertür - Schlafzimmertür. Zudem können die Zeiten, die ein Benutzer in bestimmten Räumen verbringt, erfasst werden. Wenn nach einer Einlernphase ein bestimmtes Muster erkannt wurde, können dann Fehlalarme besser vermieden werden; so wäre etwa dann, wenn ein Mitbewohner die Wohnungstüre öffnet und den üblichen und bekannten Ablauf an Türöffnungen vornimmt, eine Fehlalarmierung zu vermeiden, während ein Einbrecher, der die Wohnungstür öffnet, dem System dadurch auffallen wird, dass er diese typische Reihenfolge mit Intervallen, innerhalb derer er die nächsten, bestimmten Türen erwartungsgemäß öffnen sollte, nicht einhalten wird. sondern einem anderen Bewegungsmuster folgen wird. Die Auswertung der Türzustände dient also auch der Bewegungsmustererkennung, was auch zu Überwachungszwecken vorteilhaft ist.

Es sei erwähnt, dass es möglich ist, eine entsprechende Anlage zudem scharf, d.h. mit geringeren Toleranzschwellen für abweichendes Verhalten, oder weniger scharf, d.h. unter Zulassung größerer Variationen des Benutzerverhaltens zu betreiben oder bestimmte Muster als zulässig zu tolerieren. Dies bietet den Vorteil, dass Fehlalarme vermieden werden.

Bei Nutzung zu Sicherheitszwecken kann zudem eine fluchtauslösende Reaktion bei einem Eindringling angestrebt werden. So kann etwa in der gesamten Wohnung oder einem gesamten Haus jedes Licht oder eine Vielzahl von Lichtern eingeschaltet werden, wenn ein auf das Eindringen unbefugter Dritter hinweisender Zustand erfasst wird. Dies schreckt einerseits Eindringlinge ab, so dass diese typisch die Flucht ergreifen werden, und signalisiert zudem den Bewohnern eine bestehende Gefahr. Weitere Möglichkeiten bestehen darin, nicht nur Licht im Bedarfsfall zu schalten, sondern auch Überwachungssysteme wie Audio- und/oder Videosysteme scharfzuschalten bzw. einen Zugang für Dritte zu dem Video- und/oder Audiosystem zu schaffen, so dass dieser auf das Vorliegen einer vermuteten Alarmbedingung eine Überwachungsmöglichkeit bekommen, ohne dass im Normalfall die Privatsphäre verletzt wird.

Es sei erwähnt, dass gegebenenfalls eine Flucht eher durch Einhaltung einer bestimmten Reihenfolge induziert werden kann. So kann zunächst eine einzelne LED an einem Schalter blinkend geschaltet werden; danach können z.B. alle LEDs einer Farbe am Schalter blinkend geschaltet werden, bevorzugt unter Abarbeitung einer Farbsequenz wie grün-gelb-rot. Schon bei einer geringen LED-Zahl am Schalter wie 3 bis 5 LEDs ist dies so auffällig, dass bei tatsächlichen Fehlalarmen der berechtigte Benutzer oftmals Entwarnung geben wird, und andererseits ein Eindringling gerade im Dunkeln merkt, dass seine Anwesenheit erfasst ist. Noch auffälliger ist es natürlich, wenn mehrere zehn LEDs wie z.B. 40 simultan blinken, zumal gerade im Dunkeln an einer gut sichtbaren Stelle, an welcher Schalter typisch montiert werden.

Einem Eindringling noch im Dunkeln die Möglichkeit zur Flucht zu geben, kann besonders gefährliche, panikbedingte körperliche Angriffe auf die Bewohner vermeiden helfen. Dass z.B. für Aufnahmen im Dunkeln geeignete Kameras usw. gleichwohl früh aktiviert werden können, evtl. auch diesen zugeordnete IR-Lichtquellen, sei erwähnt. Ebenso können Alarmzentralen von Wachdiensten o.ä. alarmiert werden oder es kann an momentan in einem lokalen Netz betriebenen PCs die Anzeige von entsprechenden Videoströme veranlasst werden.

Danach können einzelne Lichter eingeschaltet werden, bis letztendlich eine helle Beleuchtung eines gefährdeten Bereiches erzielt ist.

Im Übrigen kann, wo über den Schalter ein laufender bzw. vorangegangener Einbruch signalisiert wird, auch zur Anzeige gebracht werden, wie lange ein solcher schon zurückliegt. Das kann z.B. durch unterschiedlich lange Blinkdauern, Erregung einer unterschiedlichen Zahl von LEDs im Schalter, Anzeigen bestimmter Muster durch Einzel-LEDs geschehen.

Es gibt bereits herkömmliche Dimmer, die entweder allmählich die Helligkeit einer Lichtquelle verändern oder, auf kurzes Doppeltasten hin, eine An/Ausschaltung vornehmen. Das Schaltermodul der vorliegenden Erfindung wird, im Hinblick darauf, dass eine Nutzung als Dimmer besonders erwogen wird, typisch ebenfalls in der Lage sein, unterschiedliche Betätigungen zu unterscheiden. Bevorzugt werden dabei aber nicht nur kurzes Doppel-Tasten von langem Tasten einer Wippe unterschieden, sondern auch mehrfach wiederholtes Tasten, Ausbleiben einer Betätigung über eine bestimmtes Zeitintervall oder zu einer bestimmten Zeit, festes/sanftes Drücken und/oder, bei Verwendung von berührungsempfindlichen und positionsempfindlichen Betätigungsfeldern, Gesten unterschieden werden. Auf die Gestenunterscheidung wird nachfolgend noch separat eingegangen werden. Sie ist besonders vorteilhaft. Es versteht sich, dass wenigstens zwei der vorgenannten Betätigungsweisen unterscheidbar sein können, es aber bevorzugt ist, wenn eine paarweise Unterscheidung aller oder zumindest mehrerer der genannten Betätigungsarten erfolgen kann. Es sei erwähnt, dass durch geeignete Auswertung beispielsweise auch das Spielen von Kindern an Lichtschaltern wirkungslos bleiben kann, Es ist auch möglich, Doppelwippen vorzusehen und mit diesen womöglich mehr als eine Auslenkung zur Unterscheidung von festem oder sanftem Drücken zu erfassen. Bereits mit einer derartigen Steuerung kann unter Heranziehung von Türzustandssignalen eine breite Anwendung eröffnet werden. Auf die Möglichkeit, mit Wippschaltern ein Signal etwa morseartig zu geben, was für Servicezwecke vorteilhaft sein kann, sei hingewiesen, auch wenn andere Servicemöglichkeiten stark bevorzugt sein werden, wie noch erläutert wird.

In einer typischen Beleuchtungssteuerung für ein Gebäude wird dann erfindungsgemäß bevorzugt ein Speicher vorhanden sein, in welchem für eine Reihe mit dem zumindest einen Sensor erfasster unterscheidbarer Türzustände Reaktionen der Beleuchtungssteuerung auf unterschiedliche Schalterbetätigungen derart hinterlegt sind, dass für wenigstens eine erkannte Schalterbetätigung bei einem ersten Zustand eine andere Beleuchtungssteuerungsreaktion hinterlegt ist als jene für die gleiche Schalterbetätigung bei einem vom ersten Türzustand abweichenden zweiten Türzustand, wobei bevorzugt zumindest eine hinterlegte Reaktion eine Alarmreaktion oder eine zumindest befristet ermöglichte Alarm-Entschärfung ist.

Bevorzugt wird ein Speicher vorhanden sein, in welchem abgelegt ist, wie die Reaktion auf eine Schalterbetätigung in Abhängigkeit von unterschiedlichen Türzuständen aussehen soll und indem auch Reaktionen in Abhängigkeit von etwa einer Tageszeit oder einem Wochentag hinterlegt sein. Die Anordnung eines geeigneten Speichers unmittelbar am Schaltermodul bzw. Dimmermodul ist bevorzugt. Sie erlaubt es, eine lokale Verwendung des Schaltermoduls vorzusehen, auch wenn momentan keine Verbindung zu einer per se vorhandenen Zentraleinheit aufgebaut werden kann, etwa weil die Kommunikation unterbrochen ist oder die Zentraleinheit nicht aktiv ist. Die erforderlichen Speichergrößen sind so gering, dass sie preislich nicht ins Gewicht fallen, auch nicht, wenn weitere Daten im Schaltermodul abgelegt sind.

Es ist vorteilhaft, wenn bei einer Beleuchtungssteuerung für ein Gebäude ein Schaltermodul mit Speicher dazu ausgebildet ist, von einer Zentraleinheit empfangene Daten im Speicher abzulegen, die eine Sollreaktion des Schaltermoduls im Ansprechen auf zumindest eines von einem gegebenen Türzustand, einer gegebenen Türzustandsänderung und/oder seiner Betätigungsweise definieren, bevorzugt eine Sollreaktion definieren, die weiter abhängt vom Kommunikationsverlauf mit der oder der Kommunikationsmöglichkeit zu der Zentraleinheit und/oder die dazu ausgebildet ist, Daten an die Zentraleinheit zu übermitteln. Das Schaltermodul ist demnach bevorzugt über eine Zentrale konfigurierbar.

Im bevorzugten Fall wird das Schaltermodul auch in der Lage sein, zu unterscheiden, wahlweise eine autarke Reaktion auf eine Schalterbetätigung vorzunehmen, d.h. nur lokal auf die Betätigung zu reagieren, oder eine Reaktion im Hinblick auf die weitere Umgebung, z.B. durch Berücksichtigung von Zuständen weiter entfernter Türen, Umgebungssensoren usw. vorzunehmen. Dazu kann geprüft werden, ob die Zentraleinheit ansprechbar ist oder nicht.

Wenn die Zentraleinheit nicht ansprechbar ist, etwa weil sie neu gebootet werden muss, sabotiert wurde oder aus anderen Gründen vom Netz gegangen ist, wird bevorzugt abgefragt, ob andere, vergleichbare Schaltermodule noch erreichbar sind und ergo von diesen Türzustände und dergleichen erfragt werden können oder ob die Kommunikation eines gegebenen Schaltermoduls zu anderen Schaltermodulen per se unterbrochen ist, was beispielsweise durch Beschädigung einer lokal am Schaltermodul vorhandenen Schnittstelle der Fall sein kann. Damit kann ein optimierter bzw. verbesserter Notbetrieb ohne Zentrale erreicht werden, der auch deshalb gut möglich ist, weil das Schaltermodul die Lichtstromleistung zumindest zu einer Lichtquelle ja unmittelbar selbst lokal in der Unterputzdose durchschaltet wie ein herkömmlicher mechanischer Schalter. Die erfindungsgemäße Anordnung ist somit besonders versagenssicher, weil ein Notbetrieb sehr einfach implementierbar ist.

Es sei im übrigen erwähnt, dass für überschaubare Anlagen eine Master-Notfunktion in den Schaltermodulen implementiert sein kann, damit ein Schaltermodul dann, wenn eine Zentraleinheit nicht ansprechbar ist, die vollständige Funktion einer Zentraleinheit übernehmen kann oder zumindest Master-Teilfunktionen implementieren kann. Es versteht sich, dass dort, wo die Zentraleinheit lediglich für die Datenkommunikation verwendet wird, selbst aber nicht besondere Schaltaufgaben übernehmen muss, und zugleich die Arbeitslast auf der Zentraleinheit nicht zu hoch ist, ein Schaltermodul die Funktion besonders gut übernehmen kann. Dabei ist vorteilhaft, dass eine Datenkommunikation über das Lichtstromnetz erfolgt und diese Kommunikation typisch so langsam ist, dass selbst das häufige Einschalten/Ausschalten von Störern wie Elektromotoren und/oder das Vorhandensein von mehreren Sicherungsrelais die Kommunikation zwischen den das Lichtstromnetz (auch) als Bus benutzenden Schaltermodulen nicht beeinträchtigt. Mit dem Fortschreiten der Mikrointegration sind für diesen Zweck der Implementierung von Master-Funktionen lediglich geringfügig höhere Rechenleistungen und etwas mehr Speicherplatz erforderlich. Beides stellt angesichts der Fortschritte der Mikroelektronik kein Hindernis für ein System mit erhöhter Ausfallsicherheit dar. Dies erhöht die Betriebssicherheit massiv.

Zwischen verschiedenen per se gleichberechtigten und zur Übernahme der Masterfunktion befähigten Schaltermodulen kann erforderlichenfalls durch Arbitrierung ausgewählt werden und/oder durch Feststellung der Signallaufzeiten zu allen anderen Schaltermodulen, was z.B. durch eine "PING-Abfrage" oder Ermittlung der Signalstärken, die von bestimmten Stationen erhalten werden, um sicherzustellen, dass ein vergleichsweise zentral liegendes Schaltermodul zu Ersatzzwecken herangezogen wird. Alternativ kann jenes Schaltermodul die MasterFunktion übernehmen, das als erstes ein zu langes Ausbleiben einer Kommunikation mit einer vorherigen Masterstation festgestellt hat und/oder die aktuellsten und/oder vollständigsten Daten über die Gesamtanlage oder einen lokalen Bereich umfasst. Es sei erwähnt, dass diese Festlegung gegebenenfalls erst nach Aushandeln oder Abfragen aller anderen Stationen geschehen wird, um zu verhindern, dass ein rein lokales Problem zur Einrichtung eines neuen und dann womöglich doppelt vorhandenen Masters in einem Bereich führt. Dass die Sicherheit gegen Fremdeingriffe und für den Alarmfall dadurch erhöht wird, dass unterschiedliche Schaltermodule die Masterfunktion übernehmen können, sei erwähnt.

Wenn in Erwägung gezogen wird, dass gegebenenfalls ein Schaltermodul Zentraleinheitsaufgaben übernehmen soll, wird vorteilhaft sein, dass typisch nur eine geringe Auslastung der zwischen den verschiedenen Teilen bestehenden Kommunikationskanäle einer Haustechnikanlage gegeben ist. Damit kann ohne Nachteil etwa hinsichtlich des zeitlichen Ansprechverhaltens ein Steuerprogramm und/oder zugehörige Betriebsparameter für ein Gesamtsystem übertragen werden, da im Regelfall die Zeiten bis zum Ausfall der Zentraleinheit sehr lang sein werden, so dass selbst bei sehr langsamen Kommunikationskanälen große Datenmengen übertragen werden können.

Es ist im Übrigen vorteilhaft, wenn bei der Beleuchtungssteuerung für ein Gebäude das Schaltermodul zur Kommunikation mit der Zentraleinheit eine Datenschnittstelle für die Datenübertragung über das Lichtstromnetz mit einer Datenübertragungsfrequenz oberhalb jener der Lichtstromwechselfrequenz aufweist, und bevorzugt zur Übertragung verschlüsselter Daten ausgebildet ist.

Für die Datenkommunikation kann dann nämlich ohne weiteres eine Zweidraht-Kommunikation über das Lichtstromnetz verwendet werden. Das Lichtstromnetz wird länderabhängig Wechselstromfrequenzen von 50 bis 60 Hertz besitzen. Die auf die Stromleitungen aufmodulierten Datensignale werden, ohne dass dies stört, problemfrei ein Mehrfaches dieser Frequenz besitzen, so dass beispielsweise mit zwischen 1440 bis 9600 Baud gearbeitet werden kann. Dies reicht bereits völlig problemfrei für die Übertragung von Schaltersignalen, Sensorsignalen usw. aus, sowie auch für die vorerwähnte Übertragung von Programmen, Programmparametern sowie gegebenenfalls Signalen von außerhalb, etwa an einer Gegensprechstelle einer Eingangstüre aufgenommene Audiosignale bzw. gegebenenfalls auch Audio-/Videosignale. Die Datenübertragungsrate wird ein Vielfaches, typisch mehr als das Zehnfache der Wechsellichtstromfrequenz betragen. Es ist auch möglich, über diese Datenschnittstelle verschlüsselt zu kommunizieren, was besonders in Mehrfamilienwohnhäusern aufgrund der Gefahr des Mithörens von Daten vorteilhaft ist.

Es sei erwähnt, dass dabei das Lichtstromnetz bevorzugt als Bus dient, also alle Schaltermodule per se mithören. Da im Regelfall eine nur kurze Kommunikation auf dem Bus benötigt wird, um bestimmte Signale zu übertragen, ist trotz recht geringer Übertragungsrate die Sendedaten-Kollisionsgefahr selbst bei komplexen Systemen gering. Im Übrigen kann mit herkömmlichen Mitteln auf eine aufgetretene Kollision hin, d.h. dann, wenn mehrere Sender gleichzeitig auf den Bus aufgesprochen haben, eine kollisionsfreie Wiederholung erreicht werden.

Dass gleichwohl einzelne Schaltermodule von einer Zentrale, einem Sensor, einem Aktor z.B. zur Rückmeldung oder einem anderen Schaltermodul adressierbar sind, sei erwähnt. Es kann auch vorgesehen sein, das Bussystem für bestimmte Zeiten, z.B. die ersten 700ms jeder Sekunde für eine bestimmte Kommunikation zu reservieren und nur in der verbleibenden Zeit eine Busbenutzung für alle Teilnehmer zuzulassen, damit bestimmte Teilnehmer zeitweise untereinander mit höherer Datenrate kommunizieren können. Da typische Schaltermodule ohne weiteres synchronisiert werden können und über einen Takt- oder Zeitgeber verfügen werden, was bevorzugt ist, und die vorgeschlagene beispielhafte Reservierung kaum durch Signalverzögerung auffällt, können dann erforderlichenfalls an bestimmten Stellen größere Datenmengen schneller übertragen werden- das kann Vorteile bieten, wenn ein mobiles Benutzerendgerät unter Ankopplung an ein lokales Schaltermodul über dessen per se relativ langsame Datenverbindung zur Zentraleinheit mit der Zentraleinheit kommunizieren soll.

Es sei insoweit weiter erwähnt, dass über die Datenschnittstelle auch Steuersignale wie für die Aktivierung eines Alarms oder Deaktivierung im Ansprechen auf eine Zahlenfeldbetätigung, oder für den Aufbau einer Audio-/Videodatenverbindung zu einer außerhalb des Gebäudes vorgesehenen Kommunikationsstation wie einer Wechselsprechanlage vorzusehen sind, und dies auch bei geringen Kanalbandbreiten wie z.B. 10kHz ausreichend sein wird.

Es kann auch gegebenenfalls eine Kommunikation nach außen aufgebaut werden, etwa über ein GSM-Modul, UMTS-Modul und/oder eine ins Internet führende, gegebenenfalls nur im Alarmfall hergestellte Verbindung. Dies wird bevorzugt in einigen wenigen Modulen und/oder einer Zentrale geschehen.

Die Beleuchtungssteuerung wird bevorzugt ein Schaltermodul aufweisen, das weiter dazu ausgebildet ist, neben der An-/Aussteuerung einer einzelnen Lichtquelle auch die Helligkeit zumindest einer Lichtquelle zu dimmen und/oder zumindest eines und bevorzugt mehrere zu steuern von Türöffner, Ton, insbesondere an einer Gegensprechanlage aufgenommenen Ton und/oder zur Bedienungshilfe vorgesehene Sprache, Türglocke, Alarmton, mehrere Raum-Lichtquellen einer Gruppe statusabhängig einzeln oder gemeinsam, und/oder, wie bereits diskutiert- gegebenenfalls zur Alarmierung auch in Sequenz nacheinander und insbesondere etwa in Sequenz wie aufgeführt, am Schaltermodul vorhandene LED oder andere Leuchtmittel, diese insbesondere nacheinander in unterschiedlichen Farben, Anzahl und/oder erst dauerhaft, dann - gegebenenfalls auch mit unterschiedlicher Taktung blinkend, Videosysteme, mehrere Raum-Lichtquellen, bevorzugt alle Lichtquellen in Sichtweite, weiter bevorzugt alle Lichtquellen in einem Haus, Alarmton, Fernalarmauslösung.

Durch Einbau eines kleinen Lautsprechers kann damit z.B. in jedem Raum eine Türöffnungsstation, bei Vorsehen eines Mikrophons zusätzlich eine Gegensprechanlage realisiert werden. Sowohl Lautsprecher als auch Mikrophon können preiswert und klein gewählt werden, zumal bei lokal vorgesehenen Summern oder Türklingellautsprechern keine besonders großen Lautstärken erforderlich sind.

Es versteht sich aus dem Vorstehenden, dass das Schaltermodul gegebenenfalls dazu ausgebildet sein kann, neben einer einzelnen Lichtstelle zumindest eines, bevorzugt mehreres zu steuern von einem Schallwandler, insbesondere zur Alarmtonwiedergabe, Sprachwiedergabe einer an einer Gegenstelle aufgenommenen Sprache, Klingelsignalerzeugung und/oder mehrerer weiterer Lichtquellen, bevorzugt aller Lichtquellen in Sichtweite und/oder aller Lichtquellen in einem Gebäude.

Es sei erwähnt, dass gegebenenfalls, abhängig von vordefinierten Zuständen, der Schalter so benützt werden kann, dass entweder alle Lichtquellen in einem Raum bzw. alle Lichtquellen einer bestimmten Gruppe angeschaltet werden können oder eine Ansteuerung nur einer einzelner Lichtquelle vorgesehen ist. Besonders vorteilhaft ist, dass dann, wenn ein Türklingelmodul ebenfalls zur Erkennung bestimmter Gesten oder eines bestimmten Betätigungsverhaltens ausgebildet ist, Klingelsignale nur an bestimmte Stellen geleitet werden müssen. So können etwa Eltern Klingelsignale abends nur im Wohnzimmer erhalten, ohne dass unruhig schlafende Kleinkinder etwa über durch im Flur Klingelsignale abgebende Schaltermodule geweckt werden.

Es versteht sich, dass nicht nur die Funktionalität verbessert sein soll, sondern insbesondere auch die Bedienung und Konfigurierung einfach gewünscht wird. Nun kann die Bedienung einer komplexeren Installation per se erleichtert werden, wenn Bedienungsgesten des Benutzers zugelassen werden, wie sie dem Benutzer per se von Smartphones und dergl. bekannt sind. Dies ist nicht zwingend, wohl aber vorteilhaft. Dafür ist es aber nicht zwingend, ein Smartphone bei jedem Schalter oder auch nur einen Touchscreen an jedem Schalter vorzusehen. Dies wäre nämlich teuer, was die Anzahl der Schalter in einem Raum reduziert, was wiederum den Komfort senkt.

Es kann daher nun in einem bevorzugten Aspekt der Erfindung in einem Gebäude ohne große Mehrkosten eine hohe Anzahl und Dichte von Schalter wie per se aus herkömmlichen Elektroinstallationen bekannt, vorgesehen werden, indem ein besonderes Schaltermodul verwendet wird. Dieses Schaltermodul wird für sich genommen als vorteilhaft angesehen und es bleibt vorbehalten, dieses Schaltermodul bzw. dieses Tastenfeld mit zugehörigem Controller unabhängig von dessen bevorzugter Einbindung an eine Beleuchtungssteuerung patentrechtlich zu beanspruchen und unter Schutz stellen zu lassen.

In dieser besonders bevorzugten Ausführung wird daher Gebrauch gemacht von einem Tastenfeld, das zwar in Verbindung mit der Erfindung besondere Vorteile bietet, aber auch unabhängig von Haustechnikinstallationen benutzt werden kann und für sich alleine und mit seinen vorteilhaften und bevorzugten Ausführungsformen als erfinderisch angesehen wird. Ein Tastenfeld gemäß diesem Aspekt der Erfindung kann ausgebildet sein mit einer Mehrzahl Betätigungstasten und einem Controller zur Reaktion auf Tastenbetätigung, wobei weiter vorgesehen ist, dass der Controller dazu ausgebildet ist, zu erkennen, ob Betätigungstasten simultan bzw. kurz nacheinander in einer bestimmten Reihenfolge bzw. für eine bestimmte Zeit und/oder auf eine bestimmte Weise betätigt wurden, so betätigte Betätigungstasten zu einer vordefinierten Gruppe gehören und im Ansprechen auf die Erkennung die künftige Reaktion auf eine Tastenbetätigung zu ändern.

So ergibt sich mit geringem Aufwand eine Bedienbarkeit vergleichbar jener von Smartphones, so dass ein besonders intuitives Bedienen möglich ist.

Es sei darauf hingewiesen, dass eine "Taste" des Tastenfeldes nicht zwingend ein Drückknopf oder eine womöglich über die Tastenfeldebene hervorragende Kurzhubtaste sein muss, sondern statt dessen auch durch einen klar abgegrenzten empfindlichen Bereich eines Folientastenfeldes realisiert sein kann. Auch ein solches Betätigungsfeld wird vorliegend als "Taste" bezeichnet. Ein Folientastenfeld macht die Gestensteuerung angenehmer. Dabei muss das Folientastenfeld nicht zwingend eine Folienoberfäche besitzen. Eine besonders bevorzugte Möglichkeit der Implementierung eines gestenerkennenden Tastenfeldes besteht in der Verwendung einer dünnen Glasscheibe, hinter welcher eine Folie angeordnet ist, die ihrerseits als berührungsempfindliche Touchfolie bzw. mit mehreren, unterscheidbaren berührungsempfindlichen Flächen gebildet ist. Wenn die Glasscheibe weiß hinterlegt ist, mattiert ist oder als Milchglasscheibe gebildet, wird so ein optisch ansprechender, unempfindlicher, leicht und angenehm zu bedienender und zu reinigender Schalter erhalten, der sich gut wandbündig oder nicht weiter über die Wand überstehend als ein herkömmlicher, in einer Unterputzdose versenkter Lichtschalter einbauen lässt. Dabei wird selbst bei dünnen Gläsern eine hohe Stabilität erreicht.

Es ist besonders bevorzugt, wenn ein einfacher Aufbau gewählt werden kann, bei welchem eine Sensorplatine mit einer teiltransparenten Folie abgedeckt wird, wobei die teiltransparente Folie die vom Benützer bedienbare Fläche darstellt und Löcher in der Sensorplatine vorgesehen sind, durch welche von hinten, ggf. beabstandet zur Platine angeordnete Leuchtmittel wie LEDs auf die teiltransparente Folie oder Glasscheibe einstrahlen. Dies hat zur Folge, dass ein hinreichend diffuser, hinreichend großer Lichtfleck auf der Folie erhalten werden kann, was es bei teiltransparente bzw. nur an bestimmten Stellen vorgesehenen teiltransparenten Flächen ermöglicht, Symbole mit geringem Aufwand auf der Platine zur Anzeige zu bringen. Indem unterschiedliche Leuchtmittel vorgesehen werden, bspw. zur Austrahlung unterschiedlicher Farben vorgesehenen Mehrfarb-LEDs können die entsprechenden weniger opaken Flächen in der Folie in unterschiedlichen Farben angeleuchtet werden.

Es sei darauf hingewiesen, dass es durchaus bereits bekannt ist, etwa ein Tastenfeld zur Eingabe eines Zugangscodes zu verwenden, etwa das Tastenfeld an einem zum Geldabheben benutzten Geldautomaten zur Eingabe der PIN. Wenn eine PIN eingegeben wird, sind jedoch relativ lange Zeiten zuzulassen, bevor der Geldautomat einen Vorgang abbricht. Bei einer Gestenerkennung sind diese Zeiten, innerhalb derer die Betätigung erfolgen muss, kurz. Typisch und bevorzugt sollte eine Geste insgesamt nicht mehr als eine Sekunde, im Regelfall weniger Zeit in Anspruch nehmen. Es ist daher bevorzugt, wenn der Controller erkennt, dass alle zur Geste gehörenden Betätigungstasten innerhalb einer Zeit von weniger als 1 Sekunde, bevorzugt unter 800ms, insbesondere bevorzugt unter 700 ms gedrückt wurden. Nur bei Einhaltung einer solchen Zeitdauer soll der Controller bevorzugt eine Geste erkennen, andernfalls soll er die Betätigung nicht als Geste interpretieren, auch wenn die Tastenreihenfolge eingehalten wird.

Weiter werden mit einer Geste ein oder mehrere Tasten überstrichen und der Finger über einen Tastenzwischenraum zur nächsten Taste bewegt. Dabei kann zwar die Dauer, während welcher eine Taste tatsächlich hinreichend fest zur Kontaktherstellung gedrückt ist, von Benutzer zu Benutzer variieren, und /oder die Dauern solcher Betätigungen bzw. die Dauern zwischen der Betätigung zweier unterschiedlicher Tasten wird variieren. Es kann vorteilhaft zur Gestenerkennung sein, wenn nicht nur die absolute Abfolge der Tastenfelder vom Controller berücksichtigt wird, sondern auch die Intervalle, die zwischen den verschiedenen Betätigungen liegen. Während es so z.B. möglich ist, die Gesamtzeit einer Betätigung von vielen Tasten nacheinander zu betrachten und damit eine verbesserte Erkennung als Geste erreicht wird, kann ergänzend noch mit dem Controller festgestellt werden, ob die Abstände zwischen zwei Tastenbetätigungen in etwa gleich sind oder stark abweichen.

Nur zur Erläuterung dienend, nicht jedoch bezüglich der baulichen Ausgestaltung beschränkend sei folgendes Beispiel: Wenn in einem Tastenfeld mit relativ kleinen, typisch einzelnen betätigten Tasten alle Tasten so breit wie die Tastenzwischenräume sind und die Tasten ansprechen, sobald ihr Rand berührt wird, ergibt eine "Wischbewegung" gleichbleibender Bewegungsgeschwindigkeit eines Fingers quer über das Tastenfeld ein Betätigungsmuster, bei dem eine erste Taste von t0 bis t+A, also für einen Zeitraum A betätigt wird. Dann befindet sich der der Finger während der Zeit t+A bis t+2A, also wiederum für einen Zeitraum A, über einem Zwischenraum, so dass in dieser Zeit keine Taste betätigt wird, dann wird sich der Finger in der Zeit t+2A bis t+3A, also wiederum für einen Zeitraum A, die zweite Taste bewegen und diese betätigen, danach wird von t+3A bis t+4A keine Tastenbetätigung erfolgen usw.

Dies kann erfasst werden. Erwähnt sei, dass viele Tastenfelder einen Prellschutz besitzen. Es kann vorteilhaft sein, einen solchen Tastenprellschutz zu deaktivieren oder ein Tastenfeld ohne einen solchen zu verwenden, weil damit auch die Dauer eines Tastendrucks erfassbar wird. Alternativ und/oder zusätzlich kann die Taste regelmäßig abgefragt werden, z.B. indem wiederholt abgefragt wird, ob eine Taste noch gedrückt ist, um daraus die Betätigungsdauer zu ermitteln. Auch bei "langsamen" Abfragen im Kilohertz-Bereich ergibt sich dann eine gute Zeitauflösung.

Die Dauer A im obigen Beispiel ist - für konstante Bewegung - jeweils gleich und es versteht sich jetzt, dass bevorzugt nicht nur die Gesamtzeit, sondern auch das Verhältnis von Dauern einzelner Betätigungen oder Nichtbetätigungen während dieser Gesamtzeit ausgewertet wird. Von Tastenfeld zu Tastenfeld und Taste zu Taste können im Übrigen unterschiedliche Quotienten oder Differenzen bei gleichbleibender Bewegung auftreten, weil nicht jedes einzelne Tastenfeld sofort bei Randberührung anspricht und/oder die Breite eines empfindlichen Tastenfeldbereiches abweichen kann von der Breite eines Tastenzwischenraumes usw. Dies kann berücksichtigt werden, indem bei der Gestenerkennung Toleranzen zugelassen werden.

Der Controller ist somit bevorzugt dazu ausgebildet, die Dauer von Tastenbetätigungen und/oder die Dauer zwischen Tastenbetätigungen zur Gestenerkennung mit zu erfassen und auszuwerten. Bevorzugt werden dabei Toleranzen zugelassen, so dass eine Betätigung dann als Geste erkannt wird, wenn die Auswertung der Dauern ein in einem Toleranzbereich liegendes Ergebnis liefert. Dies ist nicht zwingend, hilft aber signifikant, eine Geste besser von einem Code zu unterscheiden.

Es sei erwähnt, dass ein Controller, der dazu ausgebildet ist, die Dauer einer Tastenbetätigung zu erfassen, auch deshalb besonders vorteilhaft ist, weil er erlaubt, auch mit einfacher Ausbildung eines Tastenfeldes Gesten zu erkennen, z.B. wenn eine gleichzeitige Betätigung zweier Tasten des Betätigungsfeldes zugelassen wird, bei welcher der Benutzer etwa simultan mit zwei Fingern, wie Daumen und Zeigefinger, auf die Tasten drückt. Wenn dabei die Betätigung insgesamt ähnlich lange dauert wie eine mehr oder minder schnelle Spreizgeste bzw. ein Zusammenführen von Daumen und Zeigefinger, so kann - vor allem und bevorzugt - unter Berücksichtigung der aktuellen Betriebsbedingungen, unterstellt werden, dass tatsächlich eine solche Spreizgeste gemeint war, auch wenn nicht mehrere Tasten durch die Geste überstrichen werden. Durch Bezugnahme insbesondere auf einen aktuellen Betriebszustand bzw. die aktuellen Betriebsbedingungen des Tastenfeldes kann erforderlichenfalls sogar zwischen Spreizen-und Zusammenführen unterschieden werden. Damit wird also eine Gestenerkennung möglich, ohne dass tatsächlich Gesten exakt hochauflösend über einen genauen Touchscreen erfasst werden müssen. Vielmehr wird es bereits etwa mit einem 2x2 getrennte Sensorfelder aufweisenden Tastenfeld mit oder ohne zusätzliche Mittelsensor möglich, eine Vielzahl unterschiedlicher Gesten zu erfassen.

Während im Übrigen irgendeine PIN Eingabe auf einem höher auflösenden Tastenfeld oder dergleichen zudem das Pressen bestimmter Tasten erfordert, wird die Geste typisch auf einem solchen Tastenfeld bei Betätigung von mehreren Gruppen, z.B. der obersten Reihe eines Tastenfeldes, der zweiten Reihe des Tastenfeldes usw. erkannt. Es wird also zur Gestenerkennung ausreichen, wenn die betätigten Tasten in einer bestimmten Beziehung zueinander stehen, ohne dass es sich um bestimmte Tasten handeln muss.

Es sei weiter erwähnt, dass eine besonders wichtige Geste die Spreizbewegung ist. Bei einer Finger-Spreizbewegung werden zwei Finger, z.B. Daumen und Zeigefinger etwa mittig auf das Tastenfeld aufgesetzt und dann in einer Richtung nach außen bewegt, z.B. diagonal, vertikal oder horizontal. Während einer solchen Spreizbewegung werden von Daumen und Zeigefinger zum Teil zwei Tastenfelder gleichzeitig betätigt, weil sich zu bestimmten Zeiten beide Finger über einem solchen Tastenfeld betätigt werden. Bei herkömmlichen Tastenfeldern wie dem zur PIN-Eingabe an Geldautomaten verwendeten numerischen Tastenfeld wird dann nur eine Taste als betätigt angesehen. Vorliegend hingegen wird das Tastenfeld und/oder der Controller bevorzugt so angeordnet sein, dass auch eine simultane Betätigung zumindest zweier Tasten zugelassen wird. Es kann vorgesehen sein, dass eine simultane Betätigung zweier Tasten nur dann zugelassen wird, d.h. nur dann eine sinnvolle Betätigung erkannt wird, wenn eine Spreizgeste bzw. eine Zusammenführgeste erkannt wird oder eine von beiden angesichts beobachteter Betätigungsdauern angenommen werden kann. Um in einem solchen Fall ein Tastenfeld doch wie herkömmlich als Nummern-Eingabefeld zu verwenden, kann gegebenenfalls abgewartet werden, ob und wieweit zusammen mit vorhergehenden Tatenbetätigungen eine (Spreiz-) Geste erkannt wird. Ist dies nicht der Fall, wird bevorzugt eine Auswertung der Doppelbetätigung wie herkömmlich dahingehend vorgenommen, dass die zuerst gedrückte Taste als relevant angesehen und die fast simultan zur ersten gedrückte zweite Taste ignoriert wird.

Es sei im übrigen erwähnt, dass es sinnvoll ist, neben Spreizgesten noch andere Doppelbetätigungen zuzulassen. So können etwa, wenn ein Feld mit 5x5 Tasten oder 7x7 Tasten für einen Lichtdimmer verwendet wird, die oberen 2x5 Tasten zur Erhöhung der Helligkeit betätigt werden und die unteren 2x5 Tasten zur Verringerung der Helligkeit. Wird erkannt, dass eine dieser Tasten betätigt wird, ändert sich die Helligkeit entsprechend. Indem zusätzlich zugelassen wird, dass die Betätigung mehrerer Tasten in einem der definierten 2x5-Felder simultan erfolgen darf, kann erreicht werden, dass bei Drücken mehrerer Tasten die Helligkeit schneller geändert wird. Dies ist besonders vorteilhaft auch bei der Steuerung von Lautstärken, etwa wenn bei Nutzung des Schaltermoduls als Gegensprechstelle die Gegensprechlautstärke schnell reduziert werden soll, um ein gerade geführtes Telefonat nicht zu stören. Der Controller ist also bevorzugt in der Lage, die Doppel- oder Mehrfachbetätigung abhängig von einem augenblicklichen Schalterzustand unterschiedlich zu interpretieren.

Wenn eine Spreizgeste erkannt wird, kann dies gerade für die Hausinstallationssteuerung, besonders die Beleuchtungssteuerung, vorteilhaft sein, um z.B. von einer Masterschaltfunktion, in welcher alle Lichtquellen im Raum gleichzeitig betätigt werden, den Schalter "aufzuspreizen" in einen Mehrfach-Schalter für mehrere einzelne Lichtquellen (etwa, in einem Wohn-Esszimmer, jene über einem Esstisch, jene nahe einem Sofa und jene nahe einem Bücherregal). Der Controller ist also dazu ausgebildet, im Ansprechen auf eine exakt spezifizierte Geste, insbesondere eine Spreizgeste, eine Schalteraufspaltung vorzunehmen, insbesondere von einem Masterschaltmodus hin zu einem Einzelschaltmodus. Alternativ und/oder zusätzlich können so auch mehrere Funktionen simultan auf dem Tastenfeld zugänglich gemacht werden, wie Jalousie, Heizung, Lüftung, deren Verstellung jeweils temperatursenkend oder -erhöhend sein kann. Dies gilt auch dort, wo nur ein Tastenfeld geringer Auflösung verwendet wird wie ein 2x2 Tastenfeld oder ein Tastenfeld der Auslegung 2x2+Zentralsensorfeld.

Baulich kann ein Tastenfeld der Erfindung mit einem Bewegungsgesten erkennenden Controller aufgebaut werden, indem dieser einen Zeitgeber aufweist, um die Gesamtdauer der Tastenbetätigungen zu messen, der Zeitdauern zwischen Tastenbetätigungen und/oder Dauern einzelner Tastenbetätigungen misst und darauf bezogene Kennwerte, typisch Zählwerte z.B. von Takten, miteinander in Beziehung setzt, wozu typisch eine digitale Zählwertverknüpfungsstufe vorgesehen ist. Weiter wird ein Speicher vorhanden sein, um Muster abzulegen und eine Stufe, um erfasste Muster mit gespeicherten Mustern zu vergleichen.

Es versteht sich, dass bei einem berührungsempfindlichen Tastfeld zur Bedienung eine unterschiedliche Zahl an unterscheidbaren Tasten aufweisen kann. Dabei wird mit kleinen Tastenfeldern wie 3x3 oder 3x4 eine nur ungenaue Gestenerkennung möglich sein. Allerdings reichen auch bereits ungenau auflösende Tastenfelder aus, um eine Vielzahl unterschiedlicher Gesten zu unterscheiden, wenn nicht nur die räumliche Position eines oder mehrerer zur Gestenausführung verwendeten Fingers ausgewertet werden, sondern auch die Zeitdauern und Zeitverläufe einer Betätigung. Eine zu große Zahl an Betätigungsfeldern erfordert dagegen eine zu komplexe Auswertung. Besonders bevorzugt sind die Tasten in Reihen und Spalten angeordnet, besonders bevorzugt mit zwischen 5 und 9 Tasten in einer Reihe und/oder Spalte. Dies erlaubt schon eine recht sichere Gestenerkennung, erlaubt die Zuordnung einer LED oder dergl. zu jedem Tastenfeld, insbesondere mehrfarbiger LEDs und lässt gleichwohl eine einfache Controller-Ausgestaltung zu.

Es sei hier erwähnt, dass der Controller bei der bevorzugten Verwendung für eine Beleuchtungssteuerungsanlage der Erfindung in das dort gegebene Schaltermodul bzw. Dimmermodul integriert sein kann, das auch mit einer Zentrale kommuniziert und/oder einen Türzustand erfasst.

Das Tastenfeld selbst kann unbeweglich sein relativ zu einem Unterbau wie einer Unterputzdose. Dies erlaubt eine feste Anordnung an einer Unterputzdose und reduziert im Laufe der Jahre gravierender werdende Probleme mit einer Betätigungsmechanik.

Es ist vorteilhaft, mit einfachen Mitteln einem Benützer zu signalisieren, welche Auswirkung eine bestimmte nächste Betätigung haben wird. Zu diesem Zweck sind Statusanzeigen bekannt. Ein vorbekanntes Schaltermodul insbesondere für eine Beleuchtungssteuerung wie vorstehend beschrieben zum zustandsabhängigen Steuern zustandsabhängig wechselnder Haustechnikinstallationen mit einer Statusanzeige und einem den Anzeigestatus verändernden Controller ist per se bekannt; erwähnt sei diesbezüglich noch einmal die einleitend zitierte DE 10 2012 224 396 A1.

Vorliegend kann nun das preiswerte gestenerkennende Tastenfeld der Erfindung weiter ausgestaltet werden, um die Gestenerkennung optimal zu nutzen.

Dazu wird bevorzugt, dass mehrere LEDs, bevorzugt mit unterschiedlichen Farben, beim Tastenfeld angeordnet sind. Das Tastenfeld kann transparent ausgebildet sein und dann von den dahinter angeordneten LEDs durchleuchtet werden. Diese LEDs können in verschiedener Zahl vorgesehen sein und unterschiedlich eingesetzt werden, vor allem wenn der Schalter mit wechselnden Haustechnikinstallationen wie Rolladen, Jalousie, Licht, Helligkeit Lichtfarbe, Heizung, Lüftung, Klimaanlage, Türöffnung/Türsperrung, Alarmanlage usw. verwendet werden soll. Die die Folie oder Glasscheibe des Tastenfeldes hinterleuchtenden LEDs können auf einer Platine angeordnet werden und insbesondere durch Löcher in einer zwischen Folie und der LED-tragenden Platine angeordneten weiteren Platine strahlen. Diese weitere Zwischenplatine kann die für die Realisierung der Druckempfindlichkeit des Tastenfeldes erforderlichen Komponenten usw. tragen.

Es können zunächst beispielsweise zwei Ketten das Tastenfeld vertikal in drei Felder spaltenartig unterteilender und dieses durchstrahlender LEDs vorgesehen werden bzw. z.B. auch eine LED, die über eine Streuanordnung eine spaltenartige Beleuchtung ergibt. Ergänzend kann eine das Tastenfeld horizontal teilende LED-Gruppe vorhanden sein. Mit diesen kann das Tastenfeld in bis zu sechs Bereiche unterteilt werden, um gleichzeitig etwa Rollos, Heizung und Lüftung zu steuern.

Innerhalb der Bereiche, in die das Tastenfeld unterteilt wurde, können dann wiederum LEDs erregt werden oder vorhanden sein, etwa im unteren Bereich LEDs in blau und im oberen Bereich des Tastenfeldes LEDs in Rot, um damit anzuzeigen, wenn das Betätigungsfeld momentan für eine Auf-Ab-Steuerung der Heizung oder Lüftung benutzt werden kann. Auch kann mit mehreren LEDs in einer Spalte übereinander ein Statusbalken in einer Spalte angezeigt werden, um anzugeben, wie stark etwa eine Lüftung läuft, wie weit eine Heizung aufgedreht ist usw. Die geringe Anzahl an LEDs oder dergleichen, die bevorzugt vorgesehen wird, kann also reichen, um grob anzuzeigen, ob eine Lüftung momentan schon besonders stark läuft, eine Kühlung besonders stark kühlt oder die Heizung bereits sehr hoch eingestellt ist. Dieselben blauen und roten LEDs können in einer anderen Situation dann verwendet werden, um - evtl. blinkend - auf Feuer, Rauch oder dergl. - gegebenenfalls durch blinkendes Erregen der roten LED - auf mögliche Eindringlinge - evtl. durch blinkende blaue LEDs - hinzuweisen.

Dies ermöglicht es, ohne aufwendiges Display mit einigen wenigen Leuchtdioden oder anderen einzeln ansteuerbaren Leuchtmitteln in einer zumindest partiell durchleuchtbaren Tastfläche eine erhöhte Funktionalität vorzusehen. Oftmals wird es besonders bevorzugt sein, jeder Taste eines Tastenfeldes eine LED oder ein anderes separat erregbares Leuchtmittel zuzuordnen. Die oder jede LED kann eine mehrfarbige LED sein, die Licht in einer von mehreren wählbaren Farben wie rot, grün, gelb oder blau emittieren kann und gegebenenfalls durch eine nur lokal oder partiell transparente Folie leuchtet.

Zudem können - z.B. fest im Schalter hinterlegte - Icons hinterleuchtet werden, über welche gegebenenfalls angezeigt werden kann, welche Funktion derzeit einem bestimmten Tastenfeld zugeordnet ist. Diese Icons können wahlweise hinterleuchtet werden.

Da zwar die Zusammenstellung unterschiedlicher Haustechnikinstallationen, die in einem Raum benötigt werden, stark variieren kann, nicht jedoch die per se zu einem Haustechniksystem gehörenden, über eine derartige Steuerung anzusprechenden Installationseinheiten wie Rollo, Jalousie, Licht, Luft usw., kann mit einer geringen Anzahl an Icons ausgekommen werden, was wiederum bedeutet, dass ein und derselbe Schalter praktisch ohne Änderung des Layouts und der Mechanik für praktisch alle Anwendungen einsetzbar ist und lediglich auf Fragen wie Desinfizierbarkeit, Beständigkeit gegen Chemikalien, Explosionssicherheit usw. Rücksicht genommen werden muss.

Es sei auch erwähnt, dass gegebenenfalls noch eine Sprachsynthese bzw. ein Abruf von vordefinierten Sprachphrasen zu einer aktuellen oder nächsten Betätigung oder als Bedienhilfe insbesondere dort vorgesehen sein kann, wo bereits ein Lautsprecher integriert ist. So kann etwa Personen mit reduzierter Sehfähigkeit ein ausreichender Bedienkomfort gewährleistet werden. Für Benützer, denen selbst die einfache Bedienung nicht intuitiv genug ist, kann demnach auf eine solche Weise eine Betätigungshilfe angeboten werden. Dass auch als Hinweis auf Betriebs-, Fehler- und Alarmzustände nicht nur eine einfache Tonsequenz ausgegeben werden kann, sondern auch eine Signalisierung durch Klartext-Sprachausgabe erfolgen kann, sei erwähnt. Dies ist bei selten erlebten Gefahrfällen hilfreich, vor allem, wenn die Gefahrenart und der Ort der Gefahr angesagt wird.

Es wäre weiter alternativ und/oder zusätzlich möglich, eine wechselnde Anzeige etwa mit einer LCD-Dotmatrix vorzusehen. Dies erlaubt auch, eine Funktions-Wahl durch "Durchwischen" über den Schalter vorzunehmen, so wie an einem Smartphone bis zu einer gewünschten nächsten Anwendung "gewischt" wird. Die Bewegung kann dabei vorgenommen werden, bis das jeweils gewünschte Icon aufleuchtet. Soll der Schalter nachfolgend als Mehrfachschalter benutzt werden, kann für jede Spalte nacheinander ausgewählt werden, welcher eine Funktionalität zugeordnet werden soll; dazu kann das entsprechende Icon durch evtl. wiederholte Wischbewegung angewählt werden.

Während auch eine bekannte Trennung eines Schalters in verschiedene Bereiche wie links, rechts, oben, unten mit Wippschaltern möglich ist, und hier bereits erhebliche Vorteile erhalten werden können, wenn etwa entweder alle Lichter simultan zu schalten sind (erste Funktionalität) oder zwei oder mehr unterschiedliche Lichtquellen durch Doppeltasten auf die jeweilige Wippenhälfte entweder an- oder auszuschalten sind, bzw., durch längeres Antasten eine - zyklisch Helligkeit allmählich verändernde Dimmung der ersten und zweiten Lichtquellen zu erreichen, kann demnach eine besonders hohe Funktionalität durch kostengünstige, dauerhaft stabile Implementierung eines Schaltermoduls mit einem Feld berührungssensitiver Tasten bzw. berührungsempfindlicher Tastflächen erreicht werden.

Da auch bei nur sehr geringer Auflösung mit beispielsweise 5x5 Punkten bereits viele verschiedene Gesten wie Fingerspreizen, Fingerzusammenführen, festes Drücken an einer gegebenen Stelle, trennendes Wischen in vertikaler Richtung oder Funktionalität änderndes Wischen über den Schalter in horizontaler Richtung sehr gut unterschieden werden können und es möglich ist, jeweils ein anderes Icon auf Wischen über den Schalter zu hinterleuchten, wird der Benützer ohne weiteres den Status erkennen, auch wenn lediglich einige wenige LEDs bzw. LED-Reihen, beispielsweise 10 bis um die 40 LEDs anzusteuern sind. Dass dies deutlich billiger realisiert werden kann als etwa ein OLED- oder TFT basierter Touchscreen sei erwähnt.

Wenn ein Schaltermodul zur Statussignalisierung ausgebildet ist, eröffnet dies im Übrigen weitere Möglichkeiten, die Funktionalität zu erhöhen.

Gemäß einem weiteren Aspekt der vorliegenden Erfindung wird dazu vorgeschlagen, dass in einem solchen Fall der Controller einen Schnittstelleneingang aufweist, um ein Alarmzustandssignal zu empfangen und dazu ausgebildet ist, einen Alarmzustand mit der Statusanzeige zu signalisieren. Damit ist mit sehr geringem Aufwand eine Alarm-Zusatzfunktion implementierbar.

Werden etwa rote und blaue LEDs an entgegengesetzten Enden eines Wippschalters angeordnet, um anzuzeigen, dass eine nachfolgende Schaltermodulbetätigung eine Raumtemperatur durch Ansteuerung der Heizung oder Klimaanlage erhöht oder senkt, können dieselben LEDs, die gemeinsam dauerhaft erregt werden, solange es gilt, eine Temperatur zu verändern, einzeln blinkend angesteuert werden, um etwa einen Brand- oder Rauchalarm zu signalisieren - gegebenenfalls durch blinkendes Erregen der roten LED - oder aller roten LEDs - oder durch ein blinkendes Blaulicht, um auf mögliche Eindringlinge hinzuweisen. Dies ermöglicht es, ohne aufwendiges Display mit einigen wenigen Leuchtdioden oder anderen einzeln ansteuerbaren Leuchtmitteln in einer zumindest partiell durchleuchtbaren Tastfläche eine erhöhte Funktionalität vorzusehen.

Während eine Trennung eines Schalters in verschiedene Bereiche wie links, rechts, oben, unten mit Wippschaltern sinnvoll ist, und hier bereits erhebliche Vorteile erhalten werden können, um etwa entweder alle Lichter simultan zu schalten (erste Funktionalität) oder zwei unterschiedliche Lichtquellen durch Doppeltasten auf die jeweilige Wippenhälfte entweder an- oder auszuschalten oder, durch längeres Antasten eine - zyklisch Helligkeit allmählich verändernde Dimmung der ersten und zweiten Lichtquellen zu erreichen, wird allerdings, wie aus dem Vorstehenden ersichtlich, eine besonders hohe Funktionalität durch geeignete Implementierung einer Tastenfeldes mit berührungssensitiven Tasten bzw. berührungsempfindlichen Tastflächen erreicht. Hierbei reichen gering auflösende Tastenfelder ohne weiteres aus, um eine Vielzahl unterschiedlicher Betätigungen sicher zu unterscheiden. Dass die hier diskutierten Tastenfelder im Regelfall mit einer glatten Oberfläche gebildet sein werden, d.h. einer Oberfläche, über welche sich ohne weiteres mit Finger zur Gestendarstellung in einer kontinuierlichen Bewegung ohne Störung durch Erhebungen oder Vertiefungen bewegen lassen, sei erwähnt.

Weiter sei erwähnt, dass eine Anordnung gemäß der Erfindung auch RFID-Transponder oder andere Transponder für das schlüssellose Öffnen von Türen und/oder zur Authentifizierung von Personen und Schaltfunktionen aufweisen kann. In einem solchen Fall können die RFID-Signale lokal ausgewertet werden und/oder an eine Zentrale übermittelt werden, um dort bestimmte Funktionen zu veranlassen. Es sei erwähnt, dass ein System auf Erkennen einer RFID-Kennung gegebenenfalls Schalter gemäß Benutzerpräferenzen konfigurieren kann, und zwar immer dann automatisch, wenn ein bestimmter Benützer in den Raum kommt. So wird etwa eine Reihe von Benützern kein Interesse daran haben, eine Luftzufuhr oberhalb einer Minimalschwelle in einem Büroraum einzustellen, aber höhere Temperaturen wünschen, so dass gegebenenfalls der Schalter bereits so konfiguriert wird, dass Licht und Temperatur ohne weiteres auf unterschiedlichen Schaltflächen verändert werden können, während die Lüftung nicht beeinflusst wird. Dies kann z.B. zentral geschehen, d.h. unter Übersendung von schalterkonfigurierenden Signalen von der Zentrale an den lokalen Schalter. Für eine andere Person, beispielsweise eine Putzfrau, kann es sinnvoll sein, die Temperatur im Raum zu senken, da diese Person körperlich arbeitet, und gleichzeitig Jalousien hochzufahren, um gegebenenfalls das Putzen von Fenstern zu ermöglichen. Dies kann lokal veranlasst werden, sobald die Putzfrau mit dem RFID-Transponder in den Raum kommt.

Besonders vorteilhaft ist auch, wenn das Schaltermodul bzw. der Dimmer, in einer Unterputzdose angeordnet wird. Damit er dort z.B. hinter bestehenden Lichtschaltern eingebaut werden kann, können zur Schaffung eines ausreichenden Einbauplatzes dort vorhandene Lüsterklemmen, über welche eine Stromleitung zum nächsten Lichtschalter weitergeschleift wird oder eine zweite Lampe mit separater Leitung angeklemmt werden muss, ersetzt werden. Dazu wird bevorzugt das Schaltermodul über doppelte Anschlüsse verfügen, die intern verbunden sind und Verklemmen von Leitungen ermöglicht. Durch diese Maßnahme werden zuvor in einer Unterputzdose benutzte Lüsterklemmen obsolet, was in der Unterputzdose bzw. einer Aufputzdose herkömmlicher Größe hinter dem Lichtschalter so viel Platz schafft, dass die herkömmlich verwendete Größe ausreicht. Dass alle Anschlüsse wie Stromversorgung, Lichtschalter/Taster und Lampe doppelt und neben der Phase ausgeführt werden, wird daher bevorzugt. Falls gewünscht, können überdies weitere Klemmanschlüsse für die Nullleitung bzw. den Masseanschluss vorgesehen sein.

Trotz sehr einfacher und damit preiswerter Ausgestaltung und Installation lässt sich so eine hohe Funktionalität realisieren.

Während die Bedienung einer Haustechnikinstallation mit dem vorerwähnten Schaltermodul bereits besondere Vorteile bietet und dieses als für sich genommen erfinderisch angesehen wird, und zwar sowohl bezüglich der Verwendung der Statusanzeige zu Alarmzwecken wie auch als Schaltermodul mit berührungsempfindlichen Tastfeld mit einer geringen Anzahl unterscheidbarer Taststellen und einer Hinterleuchtung mit nur wenigen, typisch unter Hundert separat ansteuernden Leuchtmitteln, von denen einige zur Hinterleuchtung von gegebenenfalls auch fest vorgegebenen Icons dienen, was ebenfalls für sich als erfinderisch angesehen wird, sind weitere Verbesserungen der Steuerung dadurch möglich, dass gegebenenfalls bestimmte Schaltfunktionen und/oder Programmierfunktionen über andere Geräte auf spezifische Weise vorgebbar sind.

Es ist daher besonders bevorzugt, wenn eine softwarebasierte Gerätesteuerung vorgesehen wird, bei welcher eine Mehrzahl unterschiedlicher Haustechnikgeräte unter Verwendung einer Zentraleinheit mit einem mobilen programmierbaren Benutzerendgerät, insbesondere einem Smartphone, gesteuert bzw. konfiguriert wird.

Dazu kann ausgenutzt werden, dass Smartphones einerseits in der Lage sind, einem Benützer hochaufgelöst Informationen darzustellen, die diesem die Programmierung einer Anlage erleichtern wie Tabellen, Diagramme usw. und ihm andererseits eine Kommunikation über eine Vielzahl von Schnittstellen wie UMTS, Wlan und Bluetooth alternativ möglich ist.

Es ist nun oft erwünscht, zur Steuerung allenfalls selten auf die teuren mobilen programmierbaren Benutzerendgeräte Rückgriff nehmen zu müssen; denn der Komfort der Benützung wird oftmals als höher empfunden, wenn ein herkömmlicher Schalter neben einem Zimmereingang oder dergl. verwendet werden kann.

Die Verwendung derartiger Smartphones zur softwarebasierten Gerätesteuerung ist jedoch nicht vollständig trivial.

So besteht ein Problem darin, dass eine für eine Vielzahl von Benützern problemfreie Verwendung mobiler programmierbarer Benützerendgeräte erfordert, dass unterschiedliche Smartphones in gleicher Weise verwendet werden können, auch wenn Smartphones sich untereinander hinsichtlich des Betriebssystems, der Auflösung usw. unterscheiden. Während es prinzipiell möglich wäre, für jedes separate Smartphone-Modell ein eigenes Programm vorzusehen, über welches eine Steuerung von Haustechnikgeräten softwarebasiert erfolgen kann, wird der Aufwand hierzu regelmäßig als prohibitiv anzusehen sein.

Hinzu kommt, dass zwar ein Smartphone zur breitbandigen Kommunikation in der Lage ist, dass aber oftmals die Gegenstelle der Gerätesteuerung und insbesondere die Verbindung zur Zentraleinheit keine großen Bandbreiten zulässt. Dies gilt insbesondere dort, wo ein lokales Schaltermodul über eine Zweidrahtleitung mit einer Zentraleinheit kommuniziert oder das Schaltermodul selbst eine Zentraleinheit darstellt und eine Zentraleinheit nicht über das Internet oder ein WLAN zur Kommunikation geöffnet werden soll, andere Verbindungen bevorzugt sind usw.

Es ist daher wünschenswert, die Verwendung mobiler programmierbarer Benutzerendgeräte auch dann zu ermöglichen, wenn unterschiedliche mobile programmierbare Benutzerendgeräte angesprochen werden müssen. Besonders bevorzugt ist es dabei, auch dann eine zumindest weitgehend gleiche Benutzung zu ermöglichen, wenn unterschiedliche mobile programmierbare Benutzerendgeräte verwendet werden.

Die Erfindung schlägt hierzu in einem weiteren Aspekt, der zwar Vorteile bei Implementierung mit den anderen oder einem anderen Aspekt der Erfindung wie vorstehend beschrieben bietet, aber gleichwohl für sich separat und unabhängig von diesen als patentfähig angesehen wird, vor, dass bei einem Verfahren zur softwarebasierten Gerätesteuerung, bei dem eine Mehrzahl unterschiedlicher Geräte unter Verwendung einer Zentraleinheit gemäß den Vorgaben aus unterschiedlichen, mit der Zentraleinheit kommunizierenden mobilen programmierbaren Benutzerendgeräten gesteuert wird, eine solche Verfahrensausführung vorgesehen ist, dass in der Zentraleinheit ein auf Steuerungssoftware bezogener virtueller Bildschirm aufgebaut wird, an ein mobiles Benutzerendgerät der Inhalt des virtuellen Bildschirms oder die Bildschirmanzeigeaufbaubefehle übertragen werden, der Inhalt des virtuellen Bildschirm am mobilen Benutzerendgerät angezeigt wird, eine Benutzereingabe mit dem mobilen Benutzerendgerät erfasst wird und darauf bezogene Signale zur Steuerungsvorgabe an die Zentraleinheit übertragen werden.

Die Erfindung gemäß diesem Aspekt hat mehrere große Vorteile. Zum einen ist kein großer Aufwand erforderlich, um an einer Zentraleinheit die Bedienung mit unterschiedlichen mobilen Benutzerendgeräten, unabhängig vom Betriebssystem usw. zu ermöglichen. Weiter wird die Anbindung einfach, da nur schmalbandige Verbindungen zur Zentralstation nötig sind. So kann etwa ein Smartphone lokal über eine vergleichsweise kurzreichweitige Schnittstelle mit langsamer Datenverbindung zur Zentralstation angesprochen werden, z.B. über eine Bluetooth-Schnittstelle in einem Schaltermodul, das die digitalen Signale dann über eine Lichtstromwechselnetz-Leitung an die Zentraleinheit weiterleitet. Dies wiederum hat Vorteile, weil dann ausgewertet werden kann, über welches lokale Schaltermodul das mobile Benutzerendgerät gerade Zugang zur Zentraleinheit hat, was Rückschlüsse auf den Standpunkt des Benutzers zulässt. Dies ist gerade in Gebäuden wichtig, wo eine Vielzahl von Räumen mit der erfindungsgemäßen Technik ausgestattet sind und/oder wo eine Vielzahl von Benutzern auf das System zugreifen möchte.

Zudem ist ein Software-Update unkritisch. Dies gilt sowohl für ein Update der Zentralstations-Software zur Hausinstallationssteuerung, weil hier ungeachtet derartiger Änderungen weiter nur ein Aufbau der virtuellen Bildschirme ermöglicht werden muss. Auch eine Aktualisierung etwa von Smartphone-Betriebssystem ist völlig unkritisch, weil dabei typisch keine Änderung an der Grafikschnittstelle erfolgt, so dass sich derartige Änderungen praktisch nicht auswirken. Damit ist ein extrem geringer Aktualisierungsaufwand gegeben.

Die Erzeugung virtueller Bildschirme in der Zentraleinheit und die Übertragung nur dieses Inhaltes respektive der zum Aufbau der Bildschirmanzeige erforderlichen Befehle etwa in OpenGL umgeht die Notwendigkeit, auf eine Vielzahl unterschiedlicher Smartphones oder dergleichen jeweils separate komplexe Softwareprogramme anbieten zu müssen. Es wird auf einfache Weise möglich, Smartphones usw. verwenden zu können. Die Übertragung der Bildschirm-Aufbaubefehle oder des virtuellen Bildschirminhaltes kann mit geringer Bandbreite erfolgen, zumal sich typische Bildschirmanzeigen besonders gut komprimieren lassen, selbst wenn nicht die Bildschirmaufbaubefehle übertragen werden, die noch wesentlich günstiger hinsichtlich der Gesamtdatenmenge sind. Dies erlaubt eine Anbindung der mobilen programmierbaren Benutzerendgeräte an die Zentraleinheit über vergleichsweise langsame Leitungen. Dazu zählt, selbst dann, wenn ab einer bestimmten Stelle Bluetooth-Verbindungen oder Wlan-Verbindungen vorgesehen sind, eine Leitung, bei welcher zumindest ein Leitungsteilabschnitt durch eine Zweidrahtdatenkommunikationsleitung gebildet ist, die auf einer Leistungsversorgung aufmoduliert ist. Es sei erwähnt, dass durch Zweidrahtleitungen hier derartige, gut verwendbare Kommunikationsmöglichkeiten geboten werden und eine Implementierung auf Zweidraht-Lichtnetzleitungen ohne weiteres möglich ist.

Als Haustechnikgeräte, die für das softwarebasierte Gerätesteuerungsverfahren verwendet werden können, seien wiederum Rollos, Licht, Lichtfarbe, Lichthelligkeit, Temperatur, Lüftung, Türöffnung, Kommunikation mit einer Gegenstellung usw. erwähnt. Es sei erwähnt, dass entweder einzelne Funktionen separat vorgegeben werden können, beispielsweise eine aktuell gewünschte Lüftergeschwindigkeit, dass aber typisch auch zusätzlich oder alternativ eine Konfiguration eines Systems, beispielsweise durch Vorgabe von in eine Gerätesteuerung einzuspeichernden Betriebsparametern für die Schalterreaktion im Ansprechen auf verschiedene Schließzustände zu verschiedenen Wochen- und/oder Tageszeiten konfigurierbar sind. Das Verfahren zur softwarebasierten Gerätesteuerung der vorliegenden Erfindung ist somit insbesondere für Konfigurationszwecke bevorzugt.

Es sei auch erwähnt, dass es in hoch komplexen Anlagen, etwa großen Bürogebäuden möglich ist, dass mehrerer Benützer simultan auf eine Zentraleinheit zugreifen und in dieser für jedes mobile programmierbar Benutzerendgerät ein eigener virtueller Bildschirm aufgebaut wird, bevorzugt mit jener Größe, die das Display am mobilen programmierbaren Benutzerendgerät jeweils spezifisch besitzt.

Es ist im Übrigen möglich, eine lokale Vorauswertung von Gesten und dergl. vorzunehmen, was die Datenlast auf der Verbindung zwischen Zentraleinheit und mobilem Benutzerendgerät weiter verringert.

Wenn für ein mobiles programmierbares Benutzerendgerät der Inhalt eines virtuellen Bildschirmes komprimiert übertragen wird, kann eine per se bekannte Komprimierung wie die JPG-Komprimierung verwendet werden, wobei im übrigen eine Differenzkomprimierung möglich ist, d.h. gegebenenfalls nur Differenzen zu vorhergehenden Bildern übertragen werden müssen. Es wird gegebenenfalls eine Komprimierung wie bei bekannten Standards für Videoströme möglich. Auf den MPEG-Standard sei beispielhaft verwiesen. Auch der dafür erforderliche Programmieraufwand ist noch extrem gering und es sind praktisch keine Benutzerendgeräte spezifischen Programmanpassungen erforderlich. Es sei erwähnt, dass die Benützereingabe typisch menüsteuerungsartig erfolgt, d.h. dass in besonders bevorzugten Varianten der Inhalt des virtuellen Bildschirms ein Programmmenü darstellt bzw. zumindest temporär darstellt, um eine bestimmte Betätigung oder Einstellung auszusuchen. Weiter sei erwähnt, dass gerade dort, wo, wie bei Smartphones und dergleichen üblich, eine gestenbasierte Steuerung erfolgt, am mobilen programmierbaren Benutzerendgerät eine Gestenvorauswertung vorgenommen werden kann.

Es sei auch ausgeführt, dass gegebenenfalls bestimmte Funktionen wie eine Zoomfunktion noch lokal am mobilen programmierbaren Benutzerendgerät ausgeführt werden können, was gerade bei der Übertragung von vektorgrafikbasierten Anzeigeaufbaubefehlen vorteilhaft ist.

Aus dem Vorstehenden wird ersichtlich sein, dass es vorteilhaft ist, wenn die mobilen programmierbaren Benutzerendgeräte einen Touchscreen besitzen.

In der besonders bevorzugten Ausführung der Erfindung mit ihren Teilaspekten wird somit ein einfaches System ermöglicht, in welchem eine Signalverbindung von einer Türe zu einem gestengesteuerten Lichtschalter bzw. Dimmer vorgesehen ist, der wiederum über eine Stromleitung mit einer Zentrale verbunden ist und auf einfache Weise mit einem Smartphone verbunden wird, was insgesamt auf einfache Weise verbesserte Anwendungen erlaubt.

Die Erfindung wird im Folgenden nur beispielsweise anhand der Zeichnungen beschrieben. In dieser ist dargestellt durch:
Fig. 1 Schema einer erfindungsgemäßen Beleuchtungssteuerung, das gemäß einem bevorzugten Verfahren softwaregesteuert mittels verschiedener mobiler Benutzerendgeräte betreibbar ist;
Fig. 2 und 3 ein Tastenfeld sowie Diagramme zur Erläuterung der Gestenerkennung darauf; Figur 4 ein einfaches Tastenfeld mit wenigen Tastenfeldern zur Gestensteuerung in allgemein kleeblattförmiger Anordnung;
Figur 5 ein Beispiel für mit einem solchen Tastenfeld erkennbaren typischen Gesten, wobei das Feld oder die Felder, auf denen eine Geste beginnen soll, mit "x" markiert sind und wobei eine etwas längere Aufenthaltsdauer eines Fingers auf einem Feld durch entsprechend verschlungene bzw. "krakelig" wirkende Linien angedeutet ist, ohne dass tatsächlich eine Bewegung erwartet wird;
Fig. 6 ein beispielhafter Aufbau des einfachen Sensorfeldes von Fig. 4.

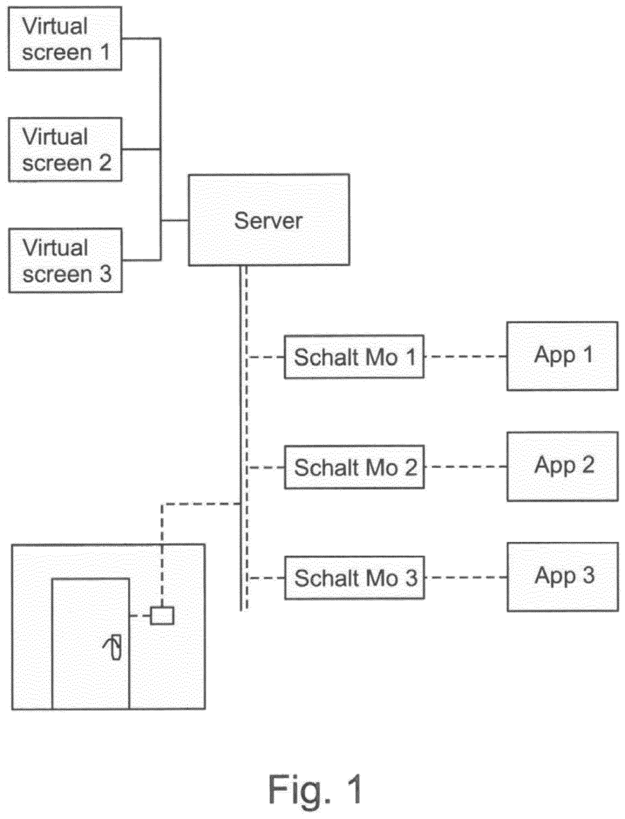

In Fig. 1 ist eine erfindungsgemäße Beleuchtungssteuerung für ein Gebäude mit einem Schaltermodul gebildet, das - wie unten links im Bild angedeutet - bei einer Türe angeordnet und mit dem Lichtstromnetz verbunden ist, um die Beleuchtung schalterbetätigungsabhängig zu steuern, wobei das Schaltermodul zur Erfassung des Türzustandes eine Schnittstelle für einen Türsensor, insbesondere eine Analogschnittstelle, aufweist und dazu ausgebildet ist, die Beleuchtung türzustandsabhängig zu steuern.

Dabei sei darauf hingewiesen, dass zwar bevorzugt alle Schaltermodule eine solche Ausbildung mit Analogschnittstelle für einen Türsensor aufweisen, dies aber nur für einen Türsensor dargestellt ist.

Die Schaltermodule Schaltmol...Schaltmo3 sind für die türzustandsabhängige Steuerung der Beleuchtung konfigurierbar und dazu einerseits mit einer Zentraleinheit SERVER über eine durch das Lichtstromnetz realisierten Zweidrahtleitung verbunden, die eine Datenrate von hier 9600baud zulässt, und weisen andererseits eine Luftschnittstelle, z.B. hier eine Bluetooth-Schnittstelle zu variierenden mobilen Benutzerendgeräte APP1...APP3 auf. Die mobilen Benutzerendgeräte sind hier Smartphones mit berührungsempfindlichem Bildschirm.

Über die Zweidrahtleitung können die Schaltermodule Informationen untereinander und mit der Zentraleinheit insbesondere über den Schließzustand der zugeordneten Türe wie über die jeweilige Analogschnittstelle erfasst, austauschen.

Weiter können sie Alarmsignale weiterleiten und/oder empfangen, um evtl. lokal eine Alarmreaktion zu veranlassen.

Die Schaltermodule sind in Unterputzdosen integriert und leiten Strom dimmend an Lichtstellen weiter. Sie weisen hier -wie möglich und bevorzugt- Betätigungsflächen in Form von Tastenfeldern auf, die auf noch zu beschreibende Art Gesten erkennen können und Status-Signale ausgeben können.

Diese Anordnung wird konfiguriert wie folgt:
Zunächst verbindet sich ein mobiles Benutzerendgerät mit einem Schaltmodul, z.B. Appl mit SchaltMo1. Dann wird das Schaltermodul dies der Zentraleinheit SERVER kommunizieren, damit von dort die Benutzung des mobilen Benutzerendgerätes veranlasst wird. Dazu wird in der Zentraleinheit ein auf Steuerungssoftware bezogener virtueller Bildschirm jener Größe aufgebaut, die am mobilen Benutzerendgerät verfügbar ist und an das mobile Benutzerendgerät der Inhalt des virtuellen Bildschirms übertragen. Dieser Bildschirm wird typisch eine menügesteuerte Konfigurierung zulassen. Das mobile Benutzerendgerät wird diesen Bildschirminhalt anzeigen und erfassen, welche Eingaben ein Benutzer darauf hin tätigt. Diese Eingabesignale oder ausgewertete Eingabesignale werden an die Zentraleinheit rückübertragen, die somit Informationen über die vom Benutzer gewünschte Konfiguration erhält und für eine konfigurationsgemäße Reaktion auf spätere Schaltermodulbetätigungen und/oder Zustandsänderungen usw. Sorge tragen kann. kann auch insbesondere entweder Schaltermodul oder ein anderes Gerät jeweils sofort vom Server konfiguriert werden und/oder oder eine Schaltermodulkonfiguration durch den Server erst nach Abschluss der Benutzerendgeräteeingabe vom Server an das Schaltermodul bzw anderes Gerät übertragen werden. Die Eingabe durch den Benutzer setzt sich fort, bis die Konfiguration beendet ist. Danach kann die Verbindung zum Benutzerendgerät beendet werden und das Schaltmodul bzw. andere Geräte vom Server wie noch erforderlich konfiguriert und danach benutzt werden.

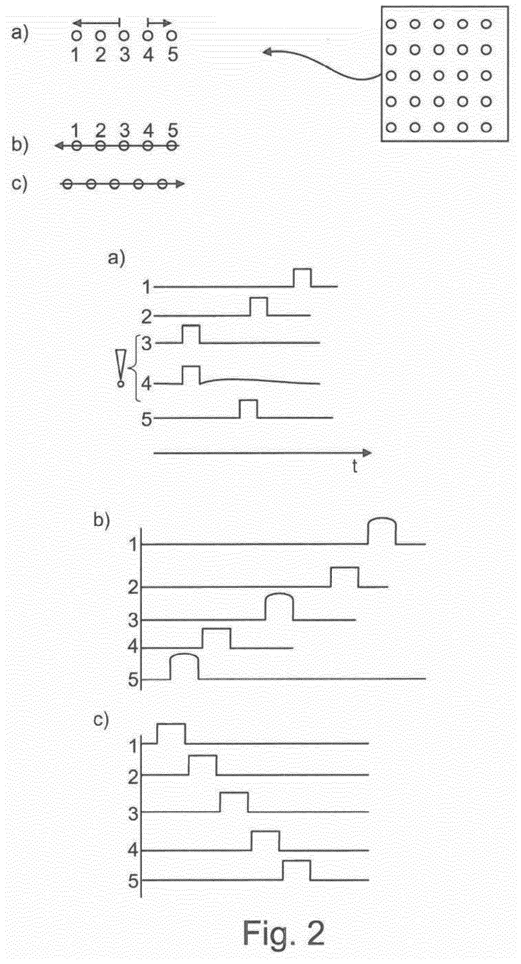

Dem Schaltermodul ist typisch ein Betätigungstastenfeld zugeordnet, das vorliegend aus einem Folientastenfeld wie in Fig. 2 rechts oben gezeigt, realisiert ist.
Dieses Folientastenfeld ist transparent gebildet, von LEDs hinterleuchtete (nicht gezeigt) und zur erleichterten Gestenerkennung so ausgebildet, dass der zugehörige Tastenkontroller, der übrigens Teil des Schaltermoduls sein kann, die Dauer eines Tastendrucks erfassen kann sowie das Drücken mehrerer Tasten gleichzeitig zulässt. Es wird also insoweit kein Prellschutz vorgesehen sein.
Im vorliegend gezeigten Beispiel wird dafür ein 5x5-Feld verwendet, das in jeder Reihe und jeder Spalte jeweils 5 Tasten besitzt.
Mit diesem können Gesten a, b, und c erkannt werden, die auf nebeneinander in einer Reihe liegenden Tasten 1,2,3,4,5 ausgeführt werden, indem a- eine Daumen-Zeigefinger-Spreizbewegung oder b- eine Wischbewegung mit einem Finger von rechts nach links oder c eine Wischbewegung mit einem Finger von links nach rechts durchgeführt wird, indem die zugehörigen An/Auszeiten, dargestellt in den Zeitdiagrammen, untersucht werden. Es ist erkennbar, dass z.B. bei der Spreizbewegung zunächst die mittigen Tasten 3 und 4 gleichzeitig betätigt werden und dann, nach einem kurzen Intervall ohne Betätigung, die Tasten 2+5 gemeinsam betätigt werden. Da das Tastenfeld eine ungerade Anzahl Tasten je Reihe besitzt, wird nach einer weiteren Pause nur die Taste 1 noch bedient.

Dieses Muster kann gut mit einem Kontroller erfasst werden und zwar unabhängig davon,. ob es bei der obersten oder einer anderen Tastenfeldreihe erzeugt wird. Dies gilt auch für die Muster b und c.

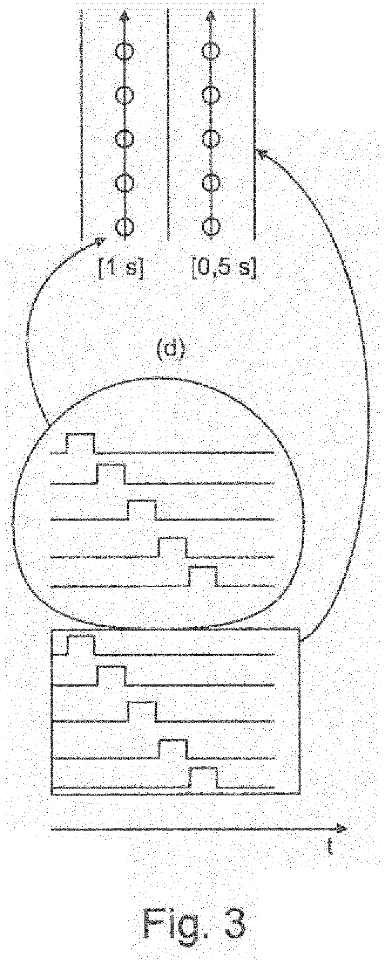

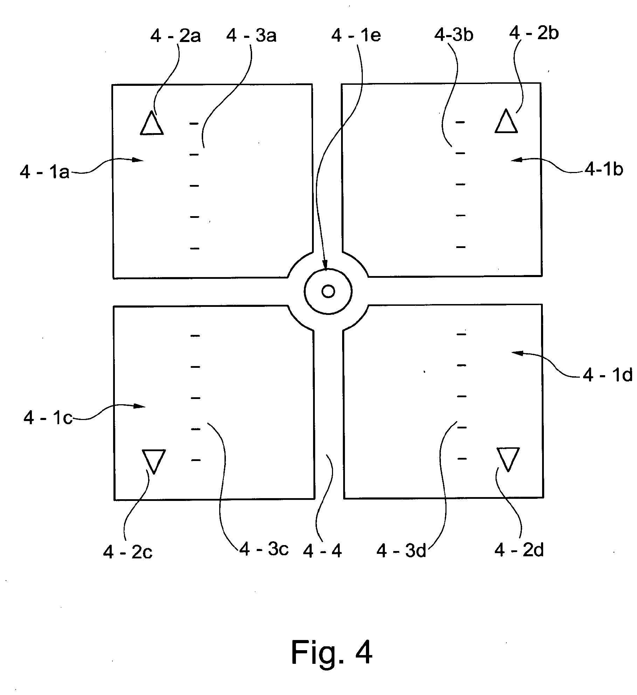

Fig. 3 zeigt, dass die Muster je nachdem, wie schnell die Wischbewegung ist, zeitlich etwas enger zusammenliegende Pulse für die Einzeltasten aufweisen oder etwas weiter auseinander liegende Pulse. Dies kann ebenfalls berücksichtigt werden bei der Gestenerkennung. Figur 4 zeigt einen Aufbau für ein besonders einfaches Tastenfeld. Dabei sind lediglich vier gleich große Felder in einem Quadrat angeordnet, wobei benachbarte Felder voneinander jeweils durch einen schmale Flächen voneinander getrennt sind. In der Mitte der Felder ist eine runde, zentrale Sensorfläche vorgesehen, die über einen schmalen sie ringförmig umbegende Trennlinie von den umliegenden vier Sensorfeldern abgegrenzt ist.

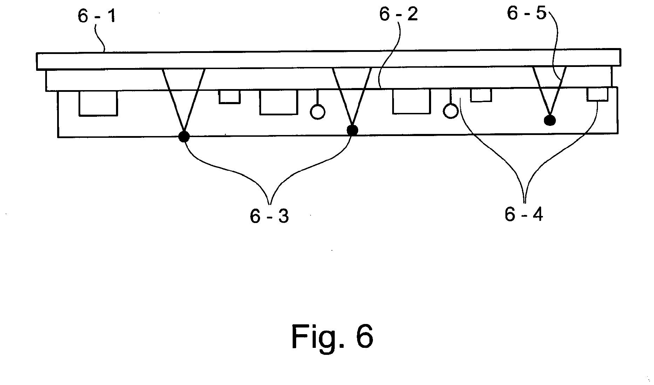

Die Tastenfeldanordnung kann, vgl. Fig. 6 gebildet sein wie folgt: Beginnend von der der Bedienungsseite her nach unten, ist zunächst einer Folie oder Glasscheibe 6-1 vorgesehen, dann eine auf der zu dieser Folie oder Glasscheibe hingewandten Seite im wesentlichen bestückungsfreie Sensorplatine 6-2, und darunter eine LED-tragende Platine 6-3.

Die Glasscheibe bzw. Folie 6-1 ist nun zur Sensorplatine hin weit gehend opak beschichtet, wobei in die Beschichtung weniger opake Beschichtungsmuster eingearbeitet sind, um bestimmte Symbole wie Pfeile und dergleichen darstellen zu können. Dies ist durch die in den Ecken sitzenden Dreiecke und die linienartig angeordneten Punkte in jedem der größeren Sensorfelder angedeutet.

Die Sensorplatine ist auf der zur Folie oder Glasscheibe hingewandten Seite nur minimal mit jenen Elementen, wie Leiterbahnen usw., versehen, die unmittelbar zur Definition und Bildung des druckempfindlichen Tastenfeldes benötigt werden; ansonsten ist die Sensorplatine u.a. mit den zur Auswertung erforderlichen Bauelementen lediglich auf der von der Glasscheibe oder Folie abgewandten Seite bestückt. Dort sind auch, wie in der Figur angedeutet, die Komponenten 6-4 so großer Bauhöhe vorgesehen, dass eine Ebenheit der Folie oder Glasscheibe in angepresstem Zustand beeinträchtigt würde.

In der Sensorplatine sind weiter Durchgangslöcher vorgesehen, und zwar an jenen Stellen, oberhalb von welchen in der Beschichtung der Glasscheibe bzw. Folie die weniger opaken Stellen zur Erzielung des Beschichtungsmusters eingearbeitet sind, also z.B. die Dreiecke, vgl. 4-2a, 4-2b, 4-2c und 4-2c oder Linienpunkte 4-3a bis 4-3d.

Bei Durchleuchtung der Sensorbereiche werden die weniger opaken Stellen in der Beschichtung der Glasscheibe oder Folie leuchten. Dazu sind unterhalb der Durchgangslöcher in der Sensorplatine auf der LED-tragenden Platine Leuchtmittel wie LEDs angeordnet sind, welche durch die Durchgangslöchern der Sensorplatine auf die Beschichtung strahlen. Die Ansteuerung der LEDs kann über die Sensorplatine erfolgen, wozu die LED-tragende Platine und die Sensorplatine entsprechend verbunden sind.

Auf diese Weise kann, insbesondere bei Verwendung von Mehrfarb-LEDs als Leuchtmittel auf der unterhalb der Sensorplatine angeordneten zweiten Platine mit einfachsten Mitteln ein sehr hochwertig wirkendes Display realisiert werden, das eine große Menge an Information anzuzeigen vermag, wobei zugleich ein großer Anteil der Sensorfläche ungestört ist, was eine hohe Empfindlichkeit und einfache Benutzung erlaubt.

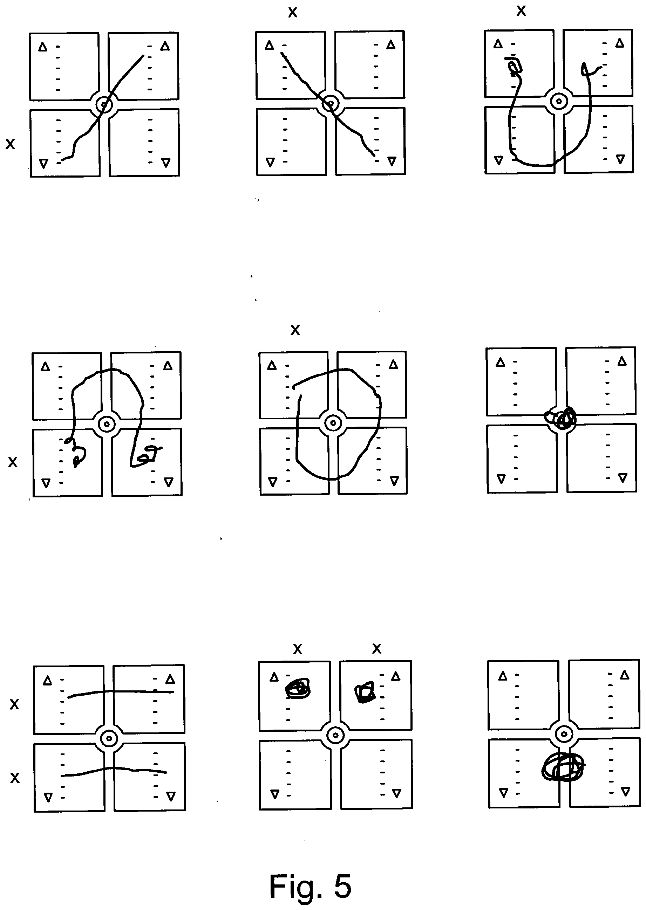

Bereits mit einem solchen Sensorfeld sind, wenn die Dauer der Betätigung einzelner Felder erfasst wird, eine Vielzahl von unterschiedlichen Gesten unterscheidbar, vergleiche Figur 5. Dabei deutet das X neben einem Feld den Beginn einer Bewegung an, ein längeres Verbleiben eines Fingers auf einem Feld ist durch eine längere, verschlungene Linie in diesem Feld dargestellt.

Es können so z.B. diagonale Wischbewegungen wie bei in der obersten Reihe von Fig. 5 erkannt werden, mit denen etwa eine Funktion ausgeschaltet werden kann oder ein Rücksetzen in einen Grundzustand erfolgt. Es können U--förmige Bewegungen erkannt werden, die über alle 4 Sensorfelder gehen wie in der obersten Reihe rechts dargestellt oder über nur ein Sensorpaar (nicht dargestellt). Nach Fig, 5, 2. Reihe, links, kann das U auch auf dem Kopf stehen. Derartige Bewegungen können beispielsweise zur Rolladen-Auf- bzw. und Ab-Steuerung verwendet werden.

Weiter kann ein einzelnes Feld längere Zeit berührt werden, um ein Licht an oder auszuschalten, vgl. unterste Reihe, rechts.

Die Betätigung in der Mitte, vgl. mittlerer Reihe rechts, kann ebenfalls separat erfasst werden, etwa um einen Alarm auszuschalten.

Eine kreisförmige Bewegung im Uhrzeigersinn (Mitte, mittlere Reihe von Fig. 5) oder gegen den Uhrzeigersinn über alle 4 äußeren Felder hinweg kann als Herauf- oder Herunterdrehen einer Heizung interpretiert werden undeine entsprechende Raumtemperaturanpassung erfolgen. Weiter ist es möglich, etwa durch Wischen von links nach rechts auf den oberen und unteren Tasten gleichzeitig anzuzeigen, vgl. untere Reihe links, dass das Sensorfeld aufgespalten werden soll, um etwa auf der linken Hälfte ein erstes Licht zu betätigen und auf der rechten Fensterhälfte ein zweites Licht, vgl. untere Reihe Mitte.

Es sei erwähnt, dass ein aktueller Betriebszustand oder eine aktuelle Schalterfunktionalität durch Erregen der geeignten LEDs angezeigt werden kann und die erkannten Befehle für die Haustechnikinstallation wie vorstehend beschrieben ausgewertet und umgesetzt werden können. Dazu wird die Sensorplatine entsprechende Schnittstellen tragen.

Es sei weiter erwähnt, dass es zur Erkennung der beschriebenen Gesten stets nur erforderlich ist, mit einem Kontroller auszuwerten, welche Tastenfelder einzeln bzw. gemeinsam und wie lange betätigt wurden. Damit ist auch mit einem einfachen Tastenfeld und einer nur geringen Belastung eines Kontrollers eine Unterscheidung sehr vieler Gesten möglich.

Beschrieben wurde somit vorstehend eine Beleuchtungssteuerung für ein Gebäude mit einem Schaltermodul, das bei einer Türe angeordnet und mit dem Lichtstromnetz verbunden ist, um die Beleuchtung schalterbetätigungsabhängig zu steuern, bei welcher vorgesehen ist, dass das Schaltermodul zur Erfassung des Türzustandes eine Schnittstelle für einen Türsensor bevorzugt eine Analogschnittstelle aufweist und dazu ausgebildet ist, die Beleuchtung türzustandsabhängig zu steuern.

Beschrieben wurde somit vorstehend weiter eine solche Beleuchtungssteuerung, bei welcher auch vorgesehen ist, dass das Schaltermodul eine Schnittstelle für einen Türsensor aus der Gruppe Sperr- und/oder Ver-/Entriegelungssensor, Schloßzustandssensor, Türbewegungssensor, Türklinkenbetätigungssensor, Türdurchgangs-Lichtschranke aufweist, insbesondere eine Analogschnittstelle.

Beschrieben wurde vorstehend weiter eine solche Beleuchtungssteuerung, bei welcher auch vorgesehen ist, dass das Schaltermodul zum unterscheidbaren Erfassen seiner Betätigungsweise ausgebildet ist, bevorzugt zur Unterscheidung zumindest zweier aus der Gruppe kurzes Tasten, langes Tasten, wiederholtes Tasten, Ausbleiben einer Betätigung, insbesondere während einer bestimmte Zeit oder über ein Zeitintervall bestimmter Länge hinweg, festes/sanftes Drücken, Gesten.

Beschrieben wurde vorstehend weiter eine solche Beleuchtungssteuerung, bei welcher auch vorgesehen ist, dass ein Speicher vorhanden ist, in welchem für eine Reihe mit dem zumindest einen Sensor erfasster unterscheidbarer Türzustände Reaktionen der Beleuchtungssteuerung auf unterschiedliche Schalterbetätigungen derart hinterlegt sind, dass für wenigstens eine erkannte Schalterbetätigung bei einem ersten Zustand eine andere Beleuchtungssteuerungsreaktion hinterlegt ist als jene für die gleiche Schalterbetätigung bei einem vom ersten Türzustand abweichenden zweiten Türzustand, wobei bevorzugt zumindest eine hinterlegte Reaktion eine Alarmreaktion oder eine zumindest befristet ermöglichte Alarm-Entschärfung ist.

Beschrieben wurde vorstehend weiter eine solche Beleuchtungssteuerung, bei welcher auch vorgesehen ist, dass das Schaltermodul dazu ausgebildet ist, im Speicher von einer Zentraleinheit empfangene Daten abzulegen, die eine Sollreaktion des Schaltermoduls im Ansprechen auf zumindest eines von einem gegebenen Türzustand, einer gegebenen Türzustandsänderung und/oder seiner Betätigungsweise definieren, bevorzugt eine Sollreaktion definieren, die weiter abhängt vom Kommunikationsverlauf mit der oder der Kommunikationsmöglichkeit zu der Zentraleinheit und/oder die dazu ausgebildet ist, Daten an die Zentraleinheit zu übermitteln.

Beschrieben wurde vorstehend weiter eine Beleuchtungssteuerung für ein Gebäude wie vorstehend beschrieben, bei welcher vorgesehen ist, dass das Schaltermodul zur Kommunikation mit der Zentraleinheit eine Datenschnittstelle für die Datenübertragung über das Lichtstromnetz mit einer Datenübertragungsfrequenz oberhalb jener der Lichtstromwechselfrequenz aufweist, und bevorzugt zur Übertragung verschlüsselter Daten ausgebildet ist.

Beschrieben wurde vorstehend weiter eine Beleuchtungssteuerung, bei welcher zusätzlich vorgesehen ist, dass das Schaltermodul weiter dazu ausgebildet ist, neben der An-/Aus Steuerung einer einzelnen Lichtquelle auch die Helligkeit zumindest einer Lichtquelle zu dimmen und/oder zumindest eines und bevorzugt mehrere zu steuern von Türöffner, Ton, insbesondere an einer Gegensprechanlage aufgenommenen Ton und/oder zur Bedienungshilfe vorgesehene Sprache wiederzugeben, Türglocke, Alarmton, mehrere Raum-Lichtquellen einer Gruppe statusabhängig einzeln oder gemeinsam, und/oder, gegebenenfalls zur Alarmierung auch in Sequenz nacheinander und insbesondere in Sequenz wie aufgeführt, am Schaltermodul vorhandene LED oder andere Leuchtmittel, insbesondere nacheinander in unterschiedlichen Farben und/oder blinkend, Videosysteme, mehrere Raum-Lichtquellen, bevorzugt alle Lichtquellen in Sichtweite, weiter bevorzugt alle Lichtquellen in einem Haus, Alarmton, Fernalarmauslösung.

Beschrieben wurde vorstehend weiter ein Schaltermodul insbesondere wie vorstehend erwähnt, zum zustandsabhängig wechselnden Steuern zustandsabhängig wechselnder Haustechnikinstallationen mit einer Statusanzeige und einem den Anzeigestatus verändernden Controller, bei welcher vorgesehen ist, dass der Controller einen Schnittstelleneingang aufweist, um ein für einen Alarmzustand indikatives Signal zu empfangen, und dazu ausgebildet ist, im Ansprechen hierauf einen Alarmzustand mit der Statusanzeige zu signalisieren.

Beschrieben wurde vorstehend weiter ein Verfahren zur softwarebasierten Gerätesteuerung, bei dem eine Mehrzahl unterschiedlicher Geräte unter Verwendung einer Zentraleinheit gemäß den Vorgaben aus unterschiedlichen, mit der Zentraleinheit bedarfsweise kommunizierenden mobilen programmierbaren Benutzerendgeräten gesteuert wird, bei welcher vorgesehen ist, dass in der Zentraleinheit ein auf Steuerungssoftware bezogener virtueller Bildschirm aufgebaut wird, an ein mobiles Benutzerendgerät der Inhalt des virtuellen Bildschirms oder die Bildschirmanzeige Aufbaubefehle übertragen werden, der Inhalt des virtuellen Bildschirm am mobilen Benutzerendgerät angezeigt wird, eine Benutzereingabe mit dem mobilen Benutzerendgerät erfasst wird und darauf bezogene Signale zur Steuerungsvorgabe an die Zentraleinheit übertragen werden.

Beschrieben wurde vorstehend weiter ein Verfahren zum Update einer Software zur softwarebasierten Gerätesteuerung, bei der eine Mehrzahl unterschiedlicher Geräte unter Verwendung einer Zentraleinheit gemäß den Vorgaben aus unterschiedlichen, mit der Zentraleinheit bedarfsweise kommunizierenden mobilen Benutzerendgeräten gesteuert wird, und bei dem in der Zentraleinheit ein auf Steuerungssoftware bezogener virtueller Bildschirm aufgebaut wird, an ein mobiles Benutzerendgerät der Inhalt des virtuellen Bildschirms oder die Bildschirmanzeige Aufbaubefehle übertragen werden, der Inhalt des virtuellen Bildschirms am mobilen Benutzerendgerät angezeigt wird, eine Benutzereingabe mit dem mobilen Benutzerendgerät bei Anzeige des virtuellen Bildschirms erfasst wird und darauf bezogene Signale zur Steuerungsvorgabe an die Zentraleinheit übertragen wird, bei welcher vorgesehen ist, dass lediglich auf der Zentraleinheit ein für alle mobilen programmierbaren Benutzerendgeräte simultan gültiges Update vorgenommen wird.

Beschrieben wurde vorstehend weiter ein Tastenfeld mit einer Mehrzahl Betätigungstasten und einem Controller zur Reaktion auf Tastenbetätigung, bei welcher vorgesehen ist, dass der Controller dazu ausgebildet ist, zu erkennen, ob Betätigungstasten kurz nacheinander in einer bestimmten Reihenfolge betätigt wurden, so betätigte Betätigungstasten zu einer vordefinierten Gruppe gehören und im Ansprechen auf die Erkennung die künftige Reaktion auf eine Tastenbetätigung zu ändern.

Beschrieben wurde vorstehend weiter ein solches Tastenfeld, bei welchem vorgesehen ist, dass der Controller dazu ausgebildet ist, eine Geste nur dann als solche zu erkennen, wenn alle zugehörigen Tasten innerhalb einer Zeit von weniger als 1 Sekunde, bevorzugt unter 800ms, insbesondere bevorzugt unter 700 ms gedrückt werden.

Beschrieben wurde vorstehend weiter ein solches Tastenfeld, bei welchem weiter vorgesehen ist, dass der Controller dazu ausgebildet ist, auch die Intervalle, die zwischen den verschiedenen Betätigungen liegen, zur Gestenerkennung auszuwerten.

Beschrieben wurde vorstehend weiter ein solches Tastenfeld bei welchem weiter vorgesehen ist, dass der Controller dazu ausgebildet ist, eine Geste zu erkennen, wenn die Abstände zwischen zwei Tastenbetätigungen und/oder die Dauern zweier Tastenbetätigungen in etwa gleich sind oder stark abweichen und mehrere Paare bestimmter Dauern zu vergleichen.

## Patentansprüche

1. Gebäude-Beleuchtungssteuerung mit einem bei einer Türe anordenbaren Schaltermodul, das
mit dem Lichtstromnetz verbindbar ist, um die Beleuchtung schalterbetätigungsabhängig zu steuern,
eine Schnittstelle für einen Türsensor zur Erfassung eines Türzustandes aufweist und dazu ausgebildet ist,
unterschiedliche Betätigungsweisen zu unterscheiden,
und die Beleuchtung türzustandsabhängig zu steuern,
**dadurch gekennzeichnet, dass**
ein Speicher vorhanden ist, in welchem
Reaktionen der Beleuchtungssteuerung auf unterschiedliche
Schalterbetätigungsweise
für eine Reihe mit dem zumindest einen Sensor erfasster unterscheidbarer
Türzustände
hinterlegt sind, wobei
für wenigstens eine erkannte Schalterbetätigungsweise
bei einem ersten Türzustand eine andere Beleuchtungssteuerungsreaktion als
bei einem zweiten Türzustand hinterlegt ist.

2. Gebäude-Beleuchtungssteuerung nach dem vorhergehenden Anspruch" worin das Schaltermodul dazu ausgebildet ist, zumindest zwei Betätigungsweisen aus der Gruppe kurzes Tasten, langes Tasten, wiederholtes Tasten, Ausbleiben einer Betätigung, Ausbleiben einer Betätigung während einer bestimmtem Zeit, Ausbleiben einer Betätigung über ein Zeitintervall bestimmter Länge hinweg, festes oder sanftes Drücken, Gesten zu unterscheiden.

3. Gebäude-Beleuchtungssteuerung nach einem der vorhergehenden Ansprüche, **dadurch gekennzeichnet, dass** das Schaltermodul eine Schnittstelle für einen Türsensor aus der Gruppe Sperr- und/oder Ver-/Entriegelungssensor, Schloßzustandssensor, Türbewegungssensor, Türklinkenbetätigungssensor, Türdurchgangs-Lichtschranke aufweist, insbesondere eine Analogschnittstelle.

4. Gebäude-Beleuchtungssteuerung nach einem der vorhergehenden Ansprüche, **dadurch gekennzeichnet, dass** das Schaltermodul weiter dazu ausgebildet ist, nicht einfach nur eine einzelne Lichtquelle an-/auszusteuern, sondern auch einen von Türglockenton, Alarmton, einen an einer Gegensprechanlage aufgenommenen Ton und/oder zur Bedienungshilfe vorgesehene Sprache wiederzugeben, und/oder die Helligkeit zumindest einer Lichtquelle zu dimmen, und/oder mehrere Raum-Lichtquellen einer Gruppe statusabhängig einzeln oder gemeinsam zu steuern, und/oder wechselnde Haustechnikinstallationen zu betätigen, die neben Licht umfassen mindestens eines aus der Gruppe Rolladen, Jalousie, Heizung, Lüftung, Klimaanlage, Türöffnung/Türsperrung, und/oder eine Fernalarmauslösung zu steuern, und/oder zur Alarmierung am Schaltermodul vorhandene LED oder andere Leuchtmittel zu steuern.

5. Gebäude-Beleuchtungssteuerung nach einem der vorhergehenden Ansprüche, **dadurch gekennzeichnet, dass** eine im Speicher hinterlegte Reaktion eine Alarmreaktion oder eine zumindest befristet ermöglichte Alarm-Entschärfung ist,

6. Gebäude-Beleuchtungssteuerung nach einem der vorhergehenden Ansprüche, **dadurch gekennzeichnet, dass** zumindest eine im Speicher hinterlegte Reaktion eine die Flucht eines Eindringling induzierende Beleuchtungssteuerungsreaktion ist.

7. Gebäude-Beleuchtungssteuerung nach einem der vorhergehenden Ansprüche, **dadurch gekennzeichnet, dass** sie dazu ausgebildet ist, den Zustand einer Wohnungseingangstüre zu erfassen.

8. Gebäude-Beleuchtungssteuerung nach einem der vorhergehenden Ansprüche, **dadurch gekennzeichnet, dass** sie dazu ausgebildet ist, den Türzustand nicht nur jener Türe auszuwerten, bei welcher das Schaltermodul angeordnet ist, sondern den Zustand vieler Türen zu erfassen, bevorzugt dergestalt, dass die Zustände mehrerer Türen auswertbar sind und/oder durch Auswertung der zeitlichen Abfolge von Zustandsänderungen mehrerer Türen ein Fehlalarm vermeidbar ist.

9. Gebäude-Beleuchtungssteuerung nach einem der vorhergehenden Ansprüche, **dadurch gekennzeichnet, dass** sie dazu ausgebildet ist, anzuzeigen, wie lange ein Einbruch zurückliegt, bevorzugt durch unterschiedlich lange Blinkdauern, Erregung einer unterschiedlichen Zahl von LEDs im Schalter und/oder Anzeigen bestimmter Muster durch Einzel-LEDs anzuzeigen.

10. Gebäude-Beleuchtungssteuerung nach einem der vorhergehenden Ansprüche, worin das Schaltermodul dazu ausgebildet ist, eine Kommunikation nach außen aufzubauen, insbesondere über ein GSM-Modul, UMTS-Modul und/oder eine ins Internet führende, gegebenenfalls nur im Alarmfall hergestellte Verbindung, und/oder zu Alarmzentralen von Wachdiensten und/oder an momentan in einem lokalen Netz betriebenen PCs die Anzeige von Videoströme zu veranlassen.

11. Gebäude-Beleuchtungssteuerung nach einem der vorhergehenden Ansprüche, **dadurch gekennzeichnet, dass** die türzustandsabhüngige Steuerung der Beleuchtung konfigurierbar ist,

12. Gebäude-Beleuchtungssteuerung nach einem der vorhergehenden Ansprüche, **dadurch gekennzeichnet, dass** das Schaltermodul eine Bluetooth-Schnittstelle für die Kommunikation zu mobilen Benutzerendgeräten aufweist.

13. Gebäude-Beleuchtungssteuerung nach einem der vorhergehenden Ansprüche, **dadurch gekennzeichnet, dass** das Schaltermodul einen RFID-Transponder oder andere Transponder aufweist und zur Authentifizierung von Personen und/oder Konfigurieren von Benutzerpräferenzen immer dann, wenn ein bestimmter Benutzer in den Raum kommt, ausgebildet ist.

14. Gebäude-Beleuchtungssteuerung nach einem der vorhergehenden Ansprüche, **dadurch gekennzeichnet, dass** sie dazu ausgebildet ist, durch eine Schalterbetätigung eine künftige Reaktion auf eine nachfolgende Erfassung des Türzustandes festzulegen, besonders bevorzugt das Ein- oder Ausschalten von Licht festzulegen als Reaktion auf eine nachfolgende Erfassung des Türzustandes festzulegen.

## Claims

1. A facility lighting control device comprising
a switch module capable of being arrangeable at a door and connectable to a light power network for controlling the lighting as a function of the switch operation,
an interface for a door sensor for detecting a state of the door and
configured to
distinguish between different operation modes
and control the lighting as a function of the state of the door,
**characterised by**
a memory in which
reactions of the lighting control device to different switch operation modes are stored
for a plurality of distinguishable door states detected by the at least one sensor
wherein
for at least one detected switch operation mode, the lighting control reaction for a first state of the door is different from that for the second state of the door.

2. The facility lighting control device according to the preceding claim, wherein the switch module is configured to distinguish at least two operation modes from the group of short tapping, long tapping, repeated tapping with non-initiation of an operation during a predetermined period of time, firm of gentle pressing, gestures.

3. The facility lighting control device according to any of the preceding claims, **characterised in that** the switch module comprises an interface for a door sensor from the group consisting of blocking and/or locking/unlocking sensor, lock state sensor, door movement sensor, doorknob actuation sensor, door passage light barrier, in particular an analogue interface.

4. The facility lighting control device according to any of the preceding claims, **characterised in that** the switch module is further configured to not only trigger/control a single light source, but also reproduce any of a doorbell sound, an alarm sound, a
sound recorded by an intercom system and/or a speech output to assist operation,
and/or dim the brightness of at least one light source,
and/or control a plurality of indoor light sources of a group as a function of the state either individually or jointly,
and/or operate home operation installations which, besides light, comprise at least one of the group consisting of aroller shutter, blind, heaters, ventilator, air conditioner, door opening/locking device,
and/or control remote alarm devices,
and/or control LEDs or other lighting appliances for alarms at the switch module.

5. The facility lighting control device according to any of the preceding claims, **characterised in that** a reaction is stored in the memory an alarm reaction or an at least temporary alarm deactivation.

6. The facility lighting control device according to any of the preceding claims, **characterised in that** at least one of the reactions stored in the memory is a lighting control reaction caused by an escaping intruder.

7. The facility lighting control device according to any of the preceding claims, **characterised by** being configured to detect the state of an apartment door.

8. The facility lighting control device according to any of the preceding claims, **characterised by** being configured to not only analyse the state of the door comprising the switch module, but the state of a plurality of doors, preferably so as to analyse the states of a plurality of doors and/or avoid a false alarm by analysing the chronological order of the state changes of a plurality of doors.

9. The facility lighting control device according to any of the preceding claims, **characterised by** being configured to indicate how long an intrusion dates back, preferably by blinking durations of variable lengths, excitations of variable numbers of LEDs in the switch and/or display of specific patterns by individual LEDs.

10. The facility lighting control device according to any of the preceding claims, wherein the switch module is configured to build up communication to the outside, in particular via a GSM module, an UMTS module and/or a connection to the Internet optionally established in case of an alarm and/or to initiate the display of videos to alarm control units of guard services and/or personal computers temporarily operated in a local network.

11. The facility lighting control device according to any of the preceding claims, **characterised in that** the lighting control as a function of the state of the door is configurable.

12. The facility lighting control device according to any of the preceding claims, **characterised in that** the switch module comprises a Bluetooth interface for communication with mobile user terminals.

13. The facility lighting control device according to any of the preceding claims, **characterised in that** the switch module comprises an RFID transponder or other transponders and is configured to authenticate persons and/or configure user preferences whenever a specific user enters the room.

14. The facility lighting control device according to any of the preceding claims, **characterised by** being configured to determine, by a switch operation, a future reaction to a subsequent detection of the state of the door, in particular to determine the switching on/off of light in response to a subsequent detection of the state of the door.

## Revendications

1. Commande d'éclairage de bâtiment comprenant
un module de commutation arrangeable au niveau d'une porte et qui peut être relié au réseau de flux lumineux pour commander l'éclairage en fonction de l'actionnement du commutateur, qui comporte une interface destinée à un capteur de porte pour détecter l'état de la porte et qui est conçu pour distinguer différents modes d'actionnement et pour commander l'éclairage en fonction de l'état de la porte, **caractérisée en ce que**
une mémoire est prévue, dans laquelle sont mémorisées des réponses de la commande d'éclairage à différents modes d'actionnement du commutateur pour une série d'états de la porte distinguables détectés par l'au moins un capteur, une réponse de commande d'éclairage dans un premier état de la porte, différente de celle dans un deuxième état de la porte, étant mémorisée pour au moins un mode d'actionnement du commutateur détecté.

2. Commande d'éclairage de bâtiment selon la revendication précédente, le module de commutation étant conçu pour distinguer au moins deux modes d'actionnement du groupe comprenant un toucher court, un toucher long, un toucher répété avec des défauts d'actionnement pendant un intervalle de temps déterminé, une pression ferme ou douce, des gestes.

3. Commande d'éclairage de bâtiment selon l'une des revendications précédentes, **caractérisée en ce que** le module de commutation comporte une interface destinée à un capteur de porte du groupe comprenant un capteur de blocage et/ou de verrouillage/déverrouillage, un capteur d'état de serrure, un capteur de mouvement de porte, un capteur d'actionnement de poignée de porte, une barrière photoélectrique de passage de porte, en particulier une interface analogique.

4. Commande d'éclairage de bâtiment selon l'une des revendications précédentes, **caractérisée en ce que** le module de commutation est en outre conçu non seulement pour activer/désactiver une source lumineuse unique mais également pour reproduire un son de cloche de porte, un son d'alarme, un son reçu au niveau d'un interphone et/ou une voix prévue pour une aide à l'utilisation,
et/ou pour atténuer la luminosité d'au moins une source lumineuse,
et/ou pour commander une pluralité de sources lumineuses de pièce d'un groupe individuellement ou conjointement en fonction de l'état,
et/ou pour actionner diverses installations techniques domestiques comprenant, en plus de la lumière, au moins un élément du groupe comprenant des volets roulants, des stores, un chauffage, une ventilation, une climatisation, une ouverture/fermeture de porte,
et/ou pour commander un déclenchement d'alarme à distance,
et/ou pour commander la LED ou un autre moyen d'éclairage présent au niveau du module de commutation pour déclencher une alarme.

5. Commande d'éclairage de bâtiment selon l'une des revendications précédentes, **caractérisée en ce que** une réponse mémorisée dans la mémoire est une réponse d'alarme ou une neutralisation d'alarme permise au moins dans une mesure limitée.

6. Commande d'éclairage de bâtiment selon l'une des revendications précédentes, **caractérisée en ce qu'**au moins une réponse mémorisée dans la mémoire est une réponse de commande d'éclairage impliquant la fuite d'un intrus.

7. Commande d'éclairage de bâtiment selon l'une des revendications précédentes, **caractérisée en ce qu'**elle est conçue pour détecter l'état d'une porte d'entrée d'appartement.

8. Commande d'éclairage de bâtiment selon l'une des revendications précédentes, **caractérisée en ce qu'**elle est conçue pour évaluer l'état non seulement de la porte dans laquelle le module de commutation est disposé mais également pour détecter l'état de nombreuses portes, de préférence de telle sorte que les états d'une pluralité de portes puissent être évalués et/ou qu'une fausse alarme puisse être évitée par évaluation de la séquence temporelle des changements d'état d'une pluralité de portes.

9. Commande d'éclairage de bâtiment selon l'une des revendications précédentes, **caractérisée en ce qu'**elle est conçue pour indiquer la durée d'un cambriolage, de préférence par des clignotements de différentes durées, l'excitation d'un nombre différent de LED dans le commutateur et/ou l'affichage de certains motifs par des LED individuelles.

10. Commande d'éclairage de bâtiment selon l'une des revendications précédentes, le module de commutation étant conçu pour établir une communication avec l'extérieur, notamment par le biais d'un module GSM, d'un module UMTS et/ou d'une liaison permettant d'accéder à Internet, éventuellement uniquement établie en cas d'alarme, et/ou pour ordonner l'affichage de flux vidéo à des stations d'alerte de services de sécurité et/ou au niveau de PC en cours d'utilisation sur un réseau local.

11. Commande d'éclairage de bâtiment selon l'une des revendications précédentes, **caractérisée en ce que** la commande de l'éclairage est configurable en fonction de l'état de la porte.

12. Commande d'éclairage de bâtiment selon l'une des revendications précédentes, **caractérisée en ce que** le module de commutation comporte une interface Bluetooth destinée à la communication avec des terminaux d'utilisateurs mobiles.

13. Commande d'éclairage de bâtiment selon l'une des revendications précédentes, **caractérisée en ce que** le module de commutation comporte un transpondeur RFID ou d'autres transpondeurs et est conçu pour l'authentification de personnes et/ou la configuration de préférences d'utilisateur lorsqu'un utilisateur déterminé entre dans la pièce.

14. Commande d'éclairage de bâtiment selon l'une des revendications précédentes, **caractérisée en ce qu'**elle est conçue pour définir par un actionnement de commutateur une réponse future à une détection ultérieure de l'état de la porte, de manière particulièrement préférée pour définir l'activation ou la désactivation de la lumière en réponse à une détection ultérieure de l'état de la porte.
